# EUROPEAN PATENT APPLICATION

(11) **EP 4 694 199 A1**
(43) Date of publication of application: **11.02.2026**
(21) Application number: 24785386.4
(22) Date of filing: 15.02.2024
(51) Int. Cl.: H04R 3/12, H04R 5/04, H04R 3/00, H04S 7/00

(54) **WEARABLE ELECTRONIC DEVICE FOR OUTPUTTING AMBIENT SOUND, OPERATING METHOD OF WEARABLE ELECTRONIC DEVICE, AND ELECTRONIC DEVICE FOR CONTROLLING WEARABLE ELECTRONIC DEVICE**

(30) Priority: 05.04.2023 KR 20230044947; 02.05.2023 KR 20230057142
(71) Applicant: Samsung Electronics Co., Ltd., Suwon-si, Gyeonggi-do 16677 (KR)
(72) Inventor: AN, Jungyeol, Suwon-si Gyeonggi-do 16677 (KR); KIM, Taewoo, Suwon-si Gyeonggi-do 16677 (KR); SON, Beakkwon, Suwon-si Gyeonggi-do 16677 (KR); KIM, Gangyoul, Suwon-si Gyeonggi-do 16677 (KR); KIM, Yangsu, Suwon-si Gyeonggi-do 16677 (KR)
(74) Representative: Gulde & Partner
(86) International application number: PCT/KR2024/095237
(87) International publication number: WO 2024/210696

(57) **Abstract**

According to an embodiment, a wearable electronic device comprises: a memory storing instructions; a communication module; a sensor; a microphone; an output device; and a processor, wherein the instructions may be configured to, when executed by the processor, cause the wearable electronic device to: on the basis of a signal obtained from an electronic device through the communication module, output sound through the output device; while the sound is being output, identify, through the sensor, a first direction of the wearable electronic device worn by the user; when the wearable electronic device is rotated in a second direction, identify a first sensing value corresponding to a rotation angle between the first direction and the second direction; and on the basis of an operation of identifying that the rotation angle indicated by the first sensing value is greater than a first specified value, output, through the output device, ambient sound of the wearable electronic device, which is obtained through the microphone. Various other embodiments are possible.

## Description

### [Technical Field]

Embodiments of the disclosure relate to a wearable electronic device outputting ambient sound, a method for operating the same, and an electronic device controlling the wearable electronic device.

### [Background Art]

The use of portable electronic devices, including smartphones, tablet PCs, and wearable devices, is on the rise. As this trend continues, these devices are increasingly being developed in wearable forms to enhance portability and user accessibility. An example of this type of electronic device may be a wearable electronic device. For example, wearable electronic devices may be implemented to be detachable from body parts or clothing, such as true wireless storage (TWS) devices (hereinafter referred to as wireless earphones) or head-mounted devices (HMDs).

Among them, the wireless earphone is a device with a compact speaker unit designed to be worn on the user's ear, such as in the ear canal, to directly transmit sound produced by the speaker unit into the user's ear, and may enable the user to hear the sound even at a low output.

### [Detailed Description of the Invention]

### [Technical Solution]

A wearable electronic device according to an embodiment may comprise memory storing instructions, a communication module, a sensor, a microphone, an output device, and a processor

According to an embodiment, the processor may be operatively connected to the memory, the communication module, the sensor, the microphone, and the output device.

In the wearable electronic device according to an embodiment, the instructions may, when executed by the processor, cause the wearable electronic device to output sound through the output device based on a signal obtained from an electronic device through the communication module.

In the wearable electronic device according to an embodiment, the instructions may, when executed by the processor, cause the wearable electronic device to, while outputting the sound, identify a first direction of the wearable electronic device worn by a user through the sensor.

In the wearable electronic device according to an embodiment, the instructions may, when executed by the processor, cause the wearable electronic device to, when identifying, through the sensor, that the wearable electronic device is rotated from the first direction to a second direction, identify a first sensing value corresponding to a rotation angle between the first direction and the second direction.

In the wearable electronic device according to an embodiment, the instructions may, when executed by the processor, cause the wearable electronic device to, based on identifying that the rotation angle indicated by the first sensing value is larger than a first specified value, output ambient sound of the wearable electronic device obtained through the microphone through the output device.

A method for operating a wearable electronic device according to an embodiment may comprise outputting sound through an output device included in the wearable electronic device based on a signal obtained from an electronic device through a communication module included in the wearable electronic device.

The method for operating the wearable electronic device according to an embodiment may comprise identifying a first direction of the wearable electronic device worn by a user through a sensor included in the wearable electronic device while outputting the sound.

The method for operating the wearable electronic device according to an embodiment may comprise, when identifying, through the sensor, that the wearable electronic device is rotated from the first direction to a second direction, obtaining a first sensing value corresponding to a rotation angle between the first direction and the second direction.

The method for operating the wearable electronic device according to an embodiment may comprise, based on identifying that the rotation angle indicated by the first sensing value is larger than a first specified value, outputting ambient sound of the wearable electronic device obtained through a microphone included in the wearable electronic device through the output device.

A non-transitory recording medium according to an embodiment may store at least one instruction capable of executing outputting sound through an output device included in a wearable electronic device based on a signal obtained from an electronic device through a communication module included in the wearable electronic device.

The non-transitory recording medium according to an embodiment may store at least one instruction capable of executing identifying a first direction of the wearable electronic device worn by a user through a sensor included in the wearable electronic device while outputting the sound.

The non-transitory recording medium according to an embodiment may store at least one instruction capable of executing, when it is identified that the wearable electronic device is rotated from a first direction to a second direction, obtaining a first sensing value corresponding to a rotation angle between the first direction and the second direction.

The non-transitory recording medium according to an embodiment may store at least one instruction capable of executing, based on identifying that the rotation angle indicated by the first sensing value is larger than a first specified value, outputting ambient sound of the wearable electronic device obtained through a microphone included in the wearable electronic device through the output device.

An electronic device according to an embodiment may comprise memory storing instructions, a communication module, and a processor.

According to an embodiment, the processor may be operatively connected to the memory and the communication module.

In the electronic device according to an embodiment, the instructions may, when executed by the processor, cause the electronic device to transmit, through the communication module, a signal related to sound to a wearable electronic device so that the wearable electronic device outputs the sound.

In the electronic device according to an embodiment, the instructions may, when executed by the processor, cause the electronic device to, based on the wearable electronic device rotating from a first direction to a second direction while the wearable electronic device outputs the sound, obtain first information about a rotation angle between the first direction and the second direction from the wearable electronic device through the communication module.

In the electronic device according to an embodiment, the instructions may, when executed by the processor, cause the electronic device to, based on identifying that the rotation angle indicated by the first information is larger than a first specified value, transmit a first control signal to the wearable electronic device through the communication module so that the wearable electronic device outputs ambient sound of the wearable electronic device while outputting the sound.

A method for operating an electronic device according to an embodiment may comprise transmitting, through a communication module included in the electronic device, a signal related to sound to a wearable electronic device so that the wearable electronic device outputs the sound.

The method for operating the electronic device according to an embodiment may comprise, based on the wearable electronic device rotating from a first direction to a second direction while the wearable electronic device outputs the sound, obtaining first information about a rotation angle between the first direction and the second direction from the wearable electronic device through the communication module.

The method for operating the electronic device according to an embodiment may comprise, based on identifying that the rotation angle indicated by the first information is larger than a first specified value, transmitting a first control signal to the wearable electronic device through the communication module so that the wearable electronic device outputs ambient sound of the wearable electronic device.

A non-transitory recording medium according to an embodiment may store at least one instruction capable of executing transmitting, through a communication module included in the electronic device, a signal related to sound to a wearable electronic device so that the wearable electronic device outputs the sound.

The non-transitory recording medium according to an embodiment may store at least one instruction capable of executing, based on the wearable electronic device rotating from a first direction to a second direction while the wearable electronic device outputs the sound, obtaining first information about a rotation angle between the first direction and the second direction from the wearable electronic device through the communication module.

The non-transitory recording medium according to an embodiment may store at least one instruction capable of executing, based on identifying that the rotation angle indicated by the first information is larger than a first specified value, transmitting a first control signal to the wearable electronic device through the communication module so that the wearable electronic device outputs ambient sound of the wearable electronic device.

### [Brief Description of Drawings]

FIG. 1 is a view illustrating an electronic device in a network environment according to various embodiments;
FIG. 2 is a view illustrating an operation of a wearable electronic device based on rotation of the wearable electronic device according to an embodiment;
FIG. 3 is a schematic block view illustrating a system including a wearable electronic device and an electronic device according to an embodiment;
FIG. 4 is a flowchart illustrating an operation of a wearable electronic device based on rotation of the wearable electronic device according to an embodiment;
FIG. 5 is a flowchart illustrating an operation of a wearable electronic device when the wearable electronic device according to an embodiment rotates by more than a specified rotation angle for a specified time period;
FIG. 6 is a flowchart illustrating an operation of a wearable electronic device when the wearable electronic device according to an embodiment rotates by more than a specified rotation angle more than a specified number of times;
FIG. 7 is a flowchart illustrating an operation of a wearable electronic device when the wearable electronic device according to an embodiment activates an ambient sound listening function and then rotates back to a previous direction;
FIG. 8 is a flowchart illustrating an operation of controlling an output device so that a wearable electronic device according to an embodiment positions a sound image of sound in a first direction;
FIG. 9 is a flowchart illustrating an operation of determining a sound image of sound based on a rotation angle by a wearable electronic device according to an embodiment;
FIG. 10 is a flowchart illustrating an operation of adjusting the volume of sound based on activation of an ambient sound listening function by a wearable electronic device according to an embodiment;
FIG. 11 is a flowchart illustrating an operation of stopping outputting sound based on activation of an ambient sound listening function by a wearable electronic device according to an embodiment;
FIG. 12 is a flowchart illustrating an operation of controlling a wearable electronic device when rotation is detected through the wearable electronic device by an electronic device according to an embodiment; and
FIG. 13 is a view illustrating an operation of a wearable electronic device based on a rotation angle of the wearable electronic device according to an embodiment.

### [Mode for Carrying out the Invention]

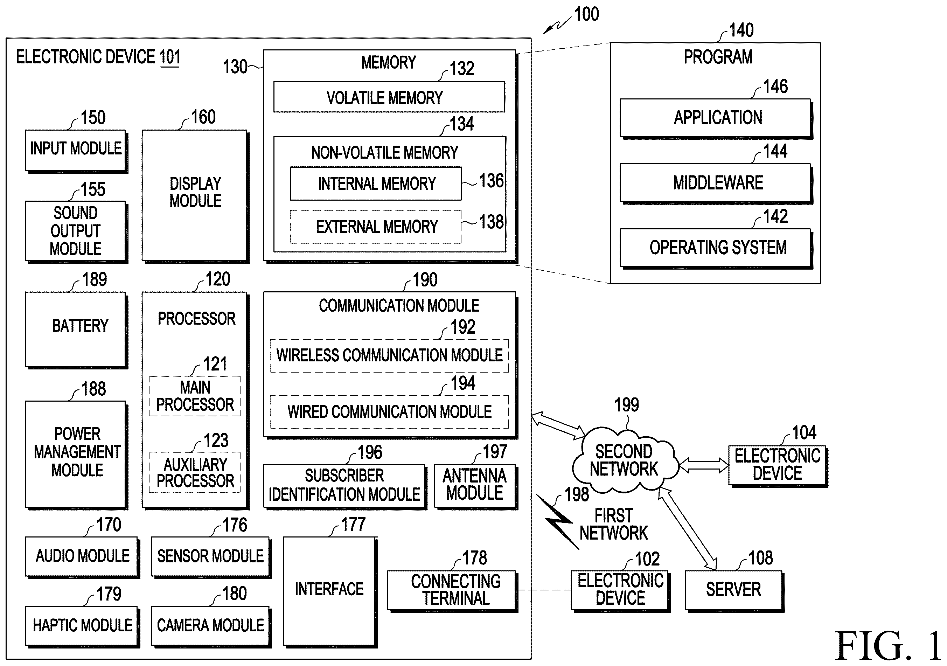

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, when the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

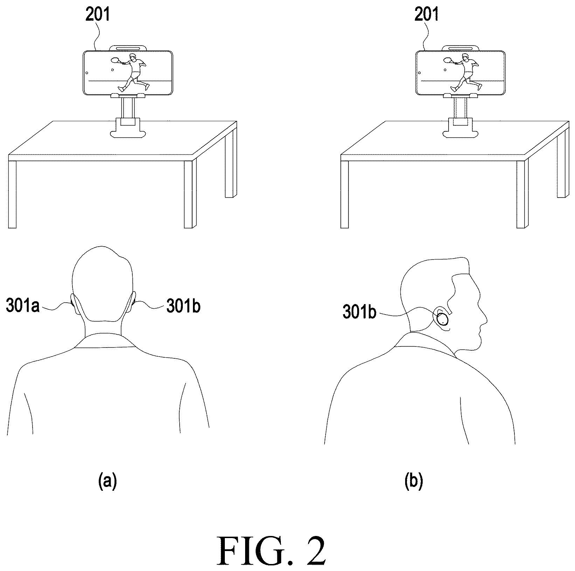

FIG. 2 is a view illustrating an operation of a wearable electronic device based on rotation of the wearable electronic device according to an embodiment.

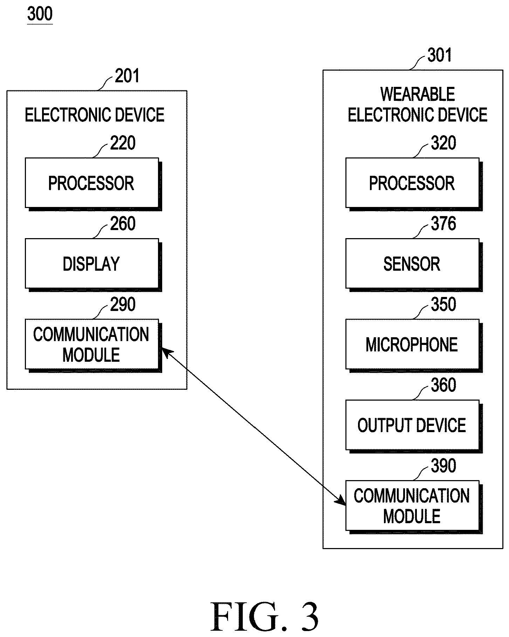

According to an embodiment, the electronic device 201 (e.g., the electronic device 102 of FIG. 1) may output an image through a display (e.g., the display module 160 of FIG. 1 or the display 260 of FIG. 2). In this case, each of the wearable electronic devices 301a and 301b (e.g., the electronic device 101 of FIG. 1) connected to the electronic device 201 may output the sound of the image through an output device (e.g., the sound output module 155 of FIG. 1 or the output device 360 of FIG. 3). The wearable electronic devices 301a and 301b may execute a spatialized audio function based on head tracking technology. The spatialized audio function may mean a function of controlling the position of the sound image of sound so that the user wearing the wearable electronic devices 301a and 301b may feel that the sound is output from a specific direction. The spatialized audio function based on head tracking technology may mean a function of controlling the position of the sound image of sound to be positioned in a reference direction even when the user's head wearing the wearable electronic devices 301a and 301b is rotated from the reference direction to a specific direction. When the spatialized audio function based on head tracking technology is executed in the wearable electronic devices 301a and 301b, the user wearing the wearable electronic devices 301a and 301b may feel that sound is output from the reference direction. For example, the user wearing wearable electronic devices 301a and 301b may feel that sound is output from the forward direction (e.g., the direction in which the electronic device 201 is positioned) before rotating his head. The user wearing the wearable electronic devices 301a and 301b may feel that sound is output from the left direction (e.g., the direction in which the electronic device 201 is positioned) after rotating his head to the right.

According to an embodiment, the wearable electronic devices 301a and 301b may determine how much the wearable electronic devices 301a and 301b are rotated from the reference direction based on the sensing value obtained through a sensor (e.g., the sensor module 176 of FIG. 1 or the sensor 376 of FIG. 3), and output the sound in which the direction of the sound image is positioned in the first direction. The reference direction may mean the forward direction of the user wearing the wearable electronic devices 301a and 301b or the direction in which the user wearing the wearable electronic devices 301a and 301b views the electronic device 201. Accordingly, the user may feel that sound is output from the reference direction through each of the wearable electronic devices 301a and 301b.

According to an embodiment, the wearable electronic devices 301a and 301b may determine whether to activate the ambient sound listening function based on the degree to which the wearable electronic devices 301a and 301b rotate from the reference direction to the specific direction.

For example, referring to FIG. 2(a), the wearable electronic devices 301a and 301b may identify the reference direction. For example, the wearable electronic devices 301a and 301b may identify the reference direction through the sensor (e.g., sensor 376 of FIG. 3). Alternatively, the wearable electronic devices 301a and 301b may identify the reference direction through a communication module (e.g., the communication module 190 of FIG. 1 or the communication module 390 of FIG. 3). The electronic device 201 may identify the reference direction through the wearable electronic devices 301a and 301b. The reference direction may mean the forward direction of the user wearing the wearable electronic devices 301a and 301b or the direction in which the user views the electronic device 201. According to an embodiment, the wearable electronic devices 301a and 301b may output notification information for the user wearing the wearable electronic devices 301a and 301b to look in the reference direction for a predetermined time through the output device 360. According to an embodiment, the electronic device 201 may output notification information for the user wearing the wearable electronic devices 301a and 301b to look in the reference direction through the display (e.g., the display module 160 of FIG. 1 or the display 260 of FIG. 3). According to an embodiment, when it is identified that the user looks in the first direction for a predetermined time, the wearable electronic devices 301a and 301b may determine the first direction as the reference direction.

Referring to FIG. 2(b), the wearable electronic devices 301a and 301b may identify whether the wearable electronic devices 301a and 301b rotate from the first direction through the sensor 376. According to an embodiment, the wearable electronic devices 301a and 301b may identify that the wearable electronic devices 301a and 301b are rotated from the first direction to the second direction through the sensor 376. For example, the second direction may be a right direction with respect to the first direction. However, it is only exemplary that the second direction is the right direction, and the technical spirit of the present invention may not be limited thereto.

The wearable electronic devices 301a and 301b may obtain a rotation angle between the first direction and the second direction. The wearable electronic devices 301a and 301b may identify whether the rotation angle indicating the degree of rotation is larger than a specified value. When it is identified that the rotation angle is larger than the specified value, the wearable electronic devices 301a and 301b may activate the ambient sound listening function. For example, the ambient sound listening function may mean a function of outputting the ambient sound of the wearable electronic devices 301a and 301b obtained through the microphone (e.g., the input module 150 of FIG. 1 or the microphone 350 of FIG. 3) included in at least one of the wearable electronic devices 301a and 301b through the output device 360. When the ambient sound listening function is activated, the wearable electronic devices 301a and 301b may output the ambient sound obtained through the microphone 350 through the output device 360. In this case, the wearable electronic devices 301a and 301b may control the output device 360 so that the sound image of sound is positioned in the first direction to notify the user that the sound is output from the first direction. The wearable electronic devices 301a and 301b may deactivate the ambient sound listening function when it is identified that the wearable electronic device 301 is rotated back into the specified area corresponding to the first direction within a specified time after the ambient sound listening function is activated according to the above-described method. The specified area may be an area based on the first direction and the specified value. For example, when the specified value is 45 degrees, the wearable electronic devices 301a and 301b may set an area formed by 45 degrees in the right direction of the first direction and 45 degrees in the left direction of the first direction as the specified area. In this case, the wearable electronic devices 301a and 301b may stop outputting the ambient sound.

When it is identified that the rotation angle indicating the degree of rotation is smaller than the specified value, the wearable electronic devices 301a and 301b may not activate the ambient sound listening function. When the wearable electronic devices 301a and 301b do not activate the ambient sound listening function, the wearable electronic devices 301a and 301b may output only the sound without outputting the ambient sound. In this case, the wearable electronic devices 301a and 301b may control the sound image of sound to be positioned in the first direction to provide the vivid sound output from the first direction to the user. According to an embodiment, the wearable electronic devices 301a and 301b position the sound image of sound in the second direction in which the user is looking, so that the user may feel that the sound is output from the second direction in which the user is looking.

Conventional wearable electronic devices were able to continuously output only the sound of the image even when the user watching the screen in which the image was reproduced rotated his head to observe the surroundings. The wearable electronic devices 301a and 301b according to various embodiments of the present invention may activate the ambient sound listening function when the user rotates his head to observe the surroundings. For example, the wearable electronic devices 301a and 301b may activate the ambient sound listening function when the user wearing the wearable electronic devices 301a and 301b rotates his head by a predetermined angle or more.

Meanwhile, in FIG. 2, the wearable electronic devices 301a and 301b are illustrated as wireless earphones, but the technical spirit of the disclosure may not be limited thereto. For example, the wearable electronic devices 301a and 301b may be implemented as headsets (e.g., one headset device) or other types of sound output devices.

FIG. 3 is a schematic block view illustrating a system including a wearable electronic device and an electronic device according to an embodiment.

According to an embodiment, the system 300 may include an electronic device 201 and a wearable electronic device 301. For example, the system 300 may refer to a system in which the wearable electronic device 301 outputs sound based on a signal for sound wirelessly received from the electronic device 201. For example, the wearable electronic device may be implemented to be detachable from a body part or clothing, such as a true wireless stereo (TWS) device (hereinafter referred to as a wireless earphone) or head-mounted device (HMD).

According to an embodiment, the wearable electronic device 301 may be implemented as a wearable electronic device that may be worn on the user's ear or face. For example, the wearable electronic device 301 may refer to any one of a wearable electronic device (301a of FIG. 2) worn on the user's left ear and a wearable electronic device (301b of FIG. 2) worn on the user's right ear. In this case, the other wearable electronic device 301a or 301b may be implemented to be identical or similar to the wearable electronic device 301. Alternatively, the wearable electronic device 301 may be implemented as a headset device. According to an embodiment, the electronic device 201 may be implemented as a smartphone or a tablet PC. However, this is an example, and the wearable electronic device 301 and the electronic device 201 of the present invention may be implemented as various types of devices.

According to an embodiment, the electronic device 201 may include memory (e.g., the memory 130 of FIG. 1), a processor 220, a display 260, and a communication module 290.

According to an embodiment, the processor 220 may wirelessly transmit a signal for sound to the wearable electronic device 301 through the communication module 290. For example, the signal for sound may include a signal related to reproducing content (e.g., video, music), or a signal related to a phone call (e.g., a phone call, a video call).

According to an embodiment, the processor 220 may transmit the control signal for controlling the wearable electronic device 301 to the wearable electronic device 301 through the communication module 290. For example, the control signal may include a control signal related to the output of sound. Further, the processor 220 may transmit a control signal corresponding to a user input to the wearable electronic device 301 based on a user input related to the output of sound.

According to an embodiment, the processor 220 may display information related to the output of sound through the display 260.

According to an embodiment, the wearable electronic device 301 may include memory (e.g., the memory 130 of FIG. 1), a processor 320, a sensor 376, a microphone 350, an output device 360, and a communication module 390.

According to an embodiment, the processor 320 may wirelessly receive the signal for sound from the electronic device 201 through the communication module 390. According to an embodiment, the processor 320 may output sound through the output device 360 based on the received signal.

According to an embodiment, the processor 320 may execute the spatialized audio function based on head tracking technology. According to an embodiment, when the spatialized audio function based on head tracking technology is executed, the processor 320 may control the output device 360 so that the position of the sound image of sound is positioned in the reference direction even when the head of the user wearing the wearable electronic device 301 is rotated from the reference direction to a specific direction. According to an embodiment, the processor 320 may output the sound in which the position (or direction) of the sound image is positioned in the reference direction through the output device 360.

According to an embodiment, the processor 320 may control the overall operation of the wearable electronic device 301. According to an embodiment, the processor 220 may control the overall operation of the electronic device 201. For example, the processors 220 and 320 may be implemented to be identical or similar to the processor 120 of FIG. 1.

According to an embodiment, the processor 220 may transmit a control signal to the wearable electronic device 301 to activate the ambient sound listening function of the wearable electronic device 301 according to the degree of rotation of the wearable electronic device 301. According to an embodiment, the processor 320 may perform the operation of activating the ambient sound listening function through the output device 360 based on the control signal.

According to an embodiment, the processor 320 may independently perform operations by the processor 320 without a control signal from the electronic device 201. For example, the processor 320 may activate the ambient sound listening function according to the degree of rotation of the wearable electronic device 301 even when it is not based on the control signal received from the electronic device 201.

According to an embodiment, the microphone 350 may obtain ambient sound. According to an embodiment, the output device 360 may be implemented as a speaker. According to an embodiment, the output device 360 may include a first channel for outputting a sound based on the signal received from the electronic device 201 and a second channel for outputting the ambient sound of the wearable electronic device 301. The first channel and the second channel may refer to different channels. According to an embodiment, the processor 320 may output the sound through the first channel and output the ambient sound of the wearable electronic device 301 through the second channel.

First of all, a case in which the processor 320 is implemented to activate the ambient sound listening function according to the degree of rotation of the wearable electronic device 301 even when it is not based on the control signal received from the electronic device 201 is described.

According to an embodiment, the wearable electronic device 301 may be communicatively connected to the electronic device 201. According to an embodiment, the electronic device 201 may reproduce content (e.g., a movie, music, or video) through the display 260 (e.g., the display 260 of FIG. 3) or may make a call connection to an external electronic device. According to an embodiment, the electronic device 201 may transmit a signal (e.g., a voice signal) based on the content or call to the wearable electronic device 301 through the communication module 290.

According to an embodiment, the processor 320 may output the sound based on the signal at the first intensity through the output device 360.

According to an embodiment, while outputting the sound at the first intensity, the processor 320 may identify the first direction of the wearable electronic device 301 worn by the user through the sensor 376. According to an embodiment, the first direction may mean the forward direction of the user wearing the wearable electronic device 301 or the direction in which the user wearing the wearable electronic device 301 faces the electronic device 201. Alternatively, the processor 320 may identify the first direction through the sensor 376 before outputting the sound. According to an embodiment, the processor 320 may output notification information for the user wearing the wearable electronic device 301 to face forward or the electronic device 201 for a specified time through the output device 360. According to an embodiment, the processor 220 may output notification information for the user wearing the wearable electronic device 301 to face forward or the electronic device 201 through the display 260.

According to an embodiment, when it is identified that the processor 320 looks in the specific direction for a specified time through the sensor 376, the specific direction may be determined as the first direction. According to an embodiment, the processor 320 may identify whether the wearable electronic device 301 rotates from the first direction through the sensor 376. The first direction may be determined as 0 degrees.

According to an embodiment, when the wearable electronic device 301 rotates to the second direction, the processor 320 may identify a first sensing value corresponding to the rotation angle indicating the degree of rotation between the first direction and the second direction. According to an embodiment, the second direction may mean a right direction, a left direction, an upper direction, or a lower direction of the first direction.

According to an embodiment, the processor 320 may identify whether the rotation angle indicating the degree of rotation is larger than a first specified value. According to an embodiment, the first specified value may mean a rotation angle for determining whether to activate the ambient sound listening function. The first specified value may be set by the processor 320 or may be set by the user. For example, the first specified value may be 45 degrees. For example, the processor 320 may identify that the wearable electronic device 301 rotates 30 degrees from the first direction to the right direction. For example, the processor 320 may identify that the wearable electronic device 301 rotates 30 degrees from the first direction to the left direction. For example, the processor 320 may identify that the wearable electronic device 301 rotates 30 degrees from the first direction to the upper direction. For example, the processor 320 may identify that the wearable electronic device 301 rotates 30 degrees from the first direction to the lower direction.

According to an embodiment, when it is identified that the rotation angle indicated by the first sensing value is not larger than the first specified value, the processor 320 may identify or determine that the user wearing the wearable electronic device 301 is facing forward or the electronic device 201. According to an embodiment, the processor 320 may continuously output only the sound through the output device 360 at the first intensity based on determining that the user is facing forward or the electronic device 201.

According to an embodiment, when it is identified that the rotation angle indicated by the first sensing value is larger than the first specified value, the processor 320 may activate the ambient sound listening function.

According to an embodiment, when it is identified that the rotation angle indicated by the first sensing value is larger than the first specified value, and it is identified that the wearable electronic device 301 faces the second direction for a first specified time from the time when the rotation angle indicated by the first sensing value is larger than the first specified time, the processor 320 may activate the ambient sound listening function. According to an embodiment, the first specified time may mean a time for the processor 320 to determine whether to activate the ambient sound listening function. The first specified time may be set by the user or may be set by the processor 320.

According to an embodiment, when it is identified that the rotation angle indicated by the first sensing value is larger than the first specified value and the wearable electronic device 301 is identified to face the second direction more than a specified number of times, the processor 320 may activate the ambient sound listening function. According to an embodiment, the specified number of times may mean the number of times for determining whether the processor 320 activates the ambient sound listening function. The specified number of times may be set by the user or may be set by the processor 320.

According to an embodiment, when it is identified that the wearable electronic device 301 rotates from the first direction to the third direction through the sensor 376, the processor 320 may identify a second sensing value corresponding to the rotation angle between the first direction and the third direction. According to an embodiment, when it is identified that the wearable electronic device 301 faces the third direction more than a specified number of times, the processor 320 may activate the ambient sound listening function even when it is identified that the rotation angle indicated by the second sensing value is smaller than the first specified value.

According to an embodiment, when it is identified that the wearable electronic device 301 faces the third direction at more than a specified speed, the processor 320 may activate the ambient sound listening function even when it is identified that the rotation angle indicated by the second sensing value is smaller than the first specified value.

According to an embodiment, when the ambient sound listening function is activated, the processor 320 may output the ambient sound of the wearable electronic device 301 obtained through the microphone 350 while outputting the sound through the output device 360. According to an embodiment, the processor 320 may output sound at the second intensity. According to an embodiment, the second intensity may be smaller than the first intensity. According to the implementation, the first intensity and the second intensity may be the same. For example, when a call is connected to an external electronic device, the processor 320 may output the intensity of the call-based sound at the second intensity smaller than the first intensity. For example, when the content is reproduced, the processor 320 may output the intensity of the content-based sound at the second intensity smaller than the first intensity.

According to an embodiment, when the ambient sound listening function is activated, the processor 320 may output ambient sound through the output device 360 without outputting sound. According to an embodiment, when the ambient sound listening function is activated, the processor 320 may stop reproducing the content. According to an embodiment, the processor 320 may not output sound based on stopping the reproduction of the content.

According to an embodiment, when the spatialized audio function based on head tracking technology is executed, the processor 320 may control the output device 360 so that the sound image of sound output through the output device 360 is positioned in the first direction. According to an embodiment, the processor 320 may control the output device 360 so that the sound image of sound is positioned in the first direction regardless of the magnitude of the rotation angle between the first direction and the second direction. For example, the user wearing the wearable electronic device 301 may feel that sound is output from the user's left direction even when the wearable electronic device 301 rotates from the first direction to the right direction. Accordingly, the wearable electronic device 301 may provide the user with an effect of outputting sound from the first direction. According to an embodiment, when the wearable electronic device 301 is rotated to the second direction to have a rotation angle larger than the first specified value from the first direction, the processor 320 may control the output device 360 so that the sound image of the ambient sound is positioned in the second direction. According to an embodiment, the user wearing the wearable electronic device 301 may feel that sound is output from the first direction and the ambient sound of the wearable electronic device 301 is output from the second direction. According to an embodiment, the wearable electronic device 301 may transfer the ambient sound to the user more realistically by positioning the sound image of the ambient sound in the second direction that the user faces. According to an embodiment, the wearable electronic device 301 may control the output device 360 so that the sound image of the ambient sound is positioned at the position of the user of the wearable electronic device 301. For example, the user may feel that ambient sound is output from the user's body (e.g., head). However, this is an example, and according to various embodiments of the present invention, the wearable electronic device 301 may position the sound image of the ambient sound at different positions.

According to an embodiment, when it is identified that the wearable electronic device 301 is rotated to the second direction and the rotation angle indicated by the first sensing value is smaller than the first specified value, the processor 320 may control the output device 360 so that the sound image of sound output through the output device 360 is positioned in the second direction. According to an embodiment, the processor 320 may provide the sound to the user more realistically by positioning the sound image of sound in the second direction the user faces. According to an embodiment, when it is identified that the wearable electronic device 301 is rotated to the second direction and the rotation angle indicated by the first sensing value is larger than the first specified value, the processor 320 may control the output device 360 so that the sound image of sound output through the output device 360 is positioned in the first direction. In this case, the processor 320 may control the output device 360 so that the sound image of the ambient sound is positioned in the second direction. According to an embodiment, the wearable electronic device 301 may transfer the ambient sound to the user more realistically by positioning the sound image of the ambient sound in the second direction that the user faces. According to an embodiment, the wearable electronic device 301 may control the output device 360 so that the sound image of the ambient sound is positioned at the position of the user of the wearable electronic device 301. For example, the user may feel that ambient sound is output from the user's body (e.g., head). According to an embodiment, the wearable electronic device 301 may provide the user with an environment in which the user may focus on the ambient sound by controlling the output device 360 so that the position of the sound image of the ambient sound is different from the position of the sound image of sound.

According to an embodiment, when it is identified that the wearable electronic device 301 is rotated back into the specified area corresponding to the first direction within the second specified time from the time when the ambient sound listening function is activated (e.g., the time when the ambient sound is output) through the output device 360, the processor 320 may stop outputting the ambient sound. The specified area may be an area based on the first direction and the first specified value. For example, when the first specified value is 45 degrees, the processor 320 may determine the first direction as 0 degrees and set an area formed by 45 degrees in the left direction of the first direction and 45 degrees in the right direction of the first direction as the specified area. Alternatively, the specified area may mean an area formed by 45 degrees in the upper direction of the first direction and 45 degrees in the lower direction of the first direction. The second specified time may be set by the user or may be set by the processor 320. The second specified time may be different from or the same as the first specified time.

According to an embodiment, when the wearable electronic device 301 is not rotated back into the specified area corresponding to the first direction within the second specified time from the time when the ambient sound listening function is activated (e.g., the time when the ambient sound is output), the processor 320 may not stop the output of the ambient sound. According to an embodiment, when the wearable electronic device 301 is rotated back into the specified area corresponding to the first direction after the second specified time from the time when the ambient sound listening function is activated, the processor 320 may stop the output of the ambient sound based on a separate user input to stop the output of the ambient sound. According to the implementation, when the wearable electronic device 301 is rotated back into the specified area corresponding to the first direction after the second specified time, the processor 320 may stop outputting the ambient sound. Accordingly, the wearable electronic device 301 may provide the user with an environment in which the user may focus on and listen to the sound related to content.

According to an embodiment, the processor 320 may be implemented to perform operations by receiving a control signal from the electronic device 201. For example, the processor 220 may transmit a control signal to the wearable electronic device 301 to output ambient sound according to the degree of rotation of the wearable electronic device 301. According to an embodiment, the wearable electronic device 301 may transmit the sensor value or the amount of change in the sensor value obtained through the sensor 376 to the electronic device 201 through the communication module 390, and receive the control signal for activating the ambient sound listening function from the electronic device 201. According to an embodiment, the processor 320 may perform the operation of outputting the ambient sound based on the control signal.

According to an embodiment, while the wearable electronic device 301 outputs sound at the first intensity, the processor 220 may obtain the first direction of the wearable electronic device 301 worn by the user through the communication module 290. According to an embodiment, the processor 220 may obtain the first direction before the wearable electronic device 301 outputs the sound. According to an embodiment, the processor 220 may output notification information for the user wearing the wearable electronic device 301 to face forward or the electronic device 201 through the display 260. According to an embodiment, the processor 220 may transmit a control signal to the wearable electronic device 301 so that the wearable electronic device 301 outputs the notification information. According to an embodiment, when it is identified that the processor 320 is facing the specific direction for a specified time through the sensor 376, the processor 320 may transmit information about the specific direction to the electronic device 201. According to an embodiment, the processor 220 may obtain a sensing value in real-time from the wearable electronic device 301 and identify whether the wearable electronic device 301 faces the specific direction for a specified time. According to an embodiment, the processor 220 may periodically obtain a sensing value from the wearable electronic device 301 through the communication module 290, and identify whether the wearable electronic device 301 faces the specific direction for a specified time. According to an embodiment, the processor 220 may determine the specific direction as the first direction.

According to an embodiment, the processor 220 may obtain first information about the rotation angle between the first direction and the second direction from the wearable electronic device 301 through the communication module 290 based on the wearable electronic device 301 rotating from the first direction to the second direction while the wearable electronic device 301 outputs sound at the first intensity.

According to an embodiment, when it is identified that the rotation angle indicated by the first information is larger than the first specified value, the processor 220 may transmit a control signal to the wearable electronic device 301 to activate the ambient sound listening function. According to an embodiment, the first specified value may be set by the processor 220 or set by the user. According to an embodiment, when it is identified that the rotation angle indicated by the first information is larger than the first specified value, and the wearable electronic device 301 faces the second direction for a first specified time from the time when the rotation angle is identified to be larger than the first specified value, the processor 220 may transmit a control signal to the wearable electronic device 301 to activate the ambient sound listening function. The first specified time may be set by the user or may be set by the processor 220. According to an embodiment, when it is identified that the rotation angle indicated by the first information is larger than the first specified value and the wearable electronic device 301 is identified to face the second direction more than a specified number of times, the processor 220 may transmit a control signal to the wearable electronic device 301 to activate the ambient sound listening function. The specified number of times may be set by the user or may be set by the processor 220.

According to an embodiment, when the ambient sound listening function is activated, the processor 320 may output ambient sound while outputting the sound at the second intensity smaller than the first intensity.

According to an embodiment, the processor 220 may transmit the control signal for controlling the output device 360 so that the sound image of sound is positioned in the first direction to the wearable electronic device 301. According to an embodiment, the processor 320 may output the sound in which the direction of the sound image is the first direction.

According to an embodiment, when it is identified that the wearable electronic device 301 is rotated to the second direction and the rotation angle indicated by the first sensing value is smaller than the first specified value, the processor 220 may transmit the control signal for controlling the output device 360 so that the sound image of sound is positioned in the second direction to the wearable electronic device 301. According to an embodiment, the processor 320 may output the sound in which the direction of the sound image is the second direction. According to an embodiment, when it is identified that the wearable electronic device 301 is rotated back into the specified area corresponding to the first direction within the second specified time after outputting the ambient sound through the output device 360, the processor 220 may transmit a control signal to the wearable electronic device 301 to deactivate the ambient sound listening function. According to an embodiment, the processor 320 may stop outputting ambient sound through the output device 360.

According to an embodiment, when it is identified that the rotation angle indicated by the first sensing value is larger than the second specified value, the processor 220 may transmit a control signal to the wearable electronic device 301 to activate the ambient sound listening function. In this case, the processor 220 may transmit a control signal to the wearable electronic device 301 to output the intensity of the sound at the second intensity smaller than the first intensity while outputting the ambient sound. According to an embodiment, when it is identified that the rotation angle indicated by the first sensing value is larger than the second specified value, the processor 220 may transmit a control signal to the wearable electronic device 301 to output ambient sound through the output device 360 without outputting sound.

According to an embodiment, the processor 320 may receive the control signal for activating the ambient sound listening function from the electronic device 201 and output the ambient sound. In this case, the processor 320 may directly control the direction of the sound image without receiving the control signal for controlling the direction of the sound image of the sound or ambient sound from the electronic device 201.

According to an embodiment, the processor 320 may control the direction of the sound image by receiving the control signal for controlling the direction of the sound image of the sound or ambient sound from the electronic device 201. In this case, the processor 320 may directly activate the ambient sound listening function without receiving the control signal for activating the ambient sound listening function from the electronic device 201.

The operations of the wearable electronic device 301 described in the drawings may be performed by the processor 320. However, for convenience of description, the operations performed by the processor 320 are described as being performed by the wearable electronic device 301. Operations of the electronic device 201 described in the following drawings may be performed by the processor 220. However, for convenience of description, operations performed by processor 220 are described as being performed by the electronic device 201.

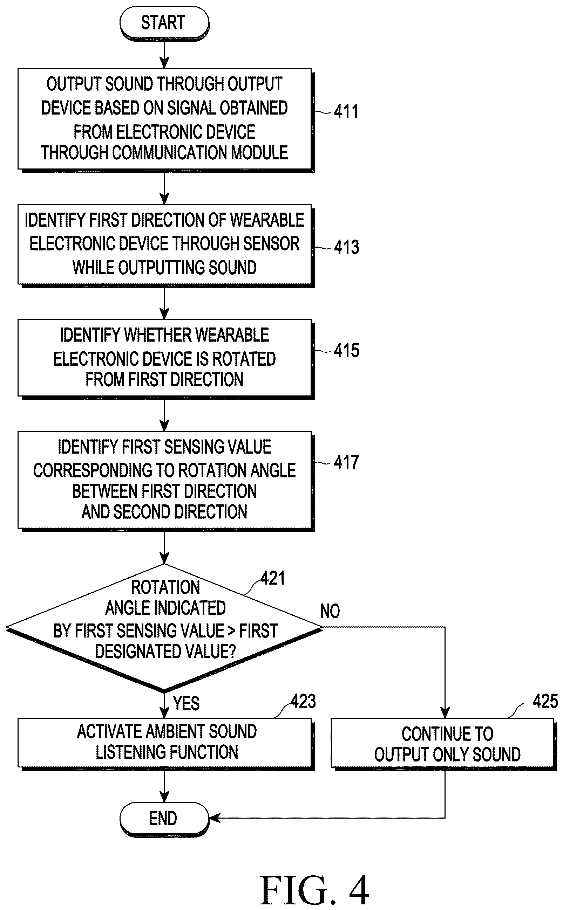

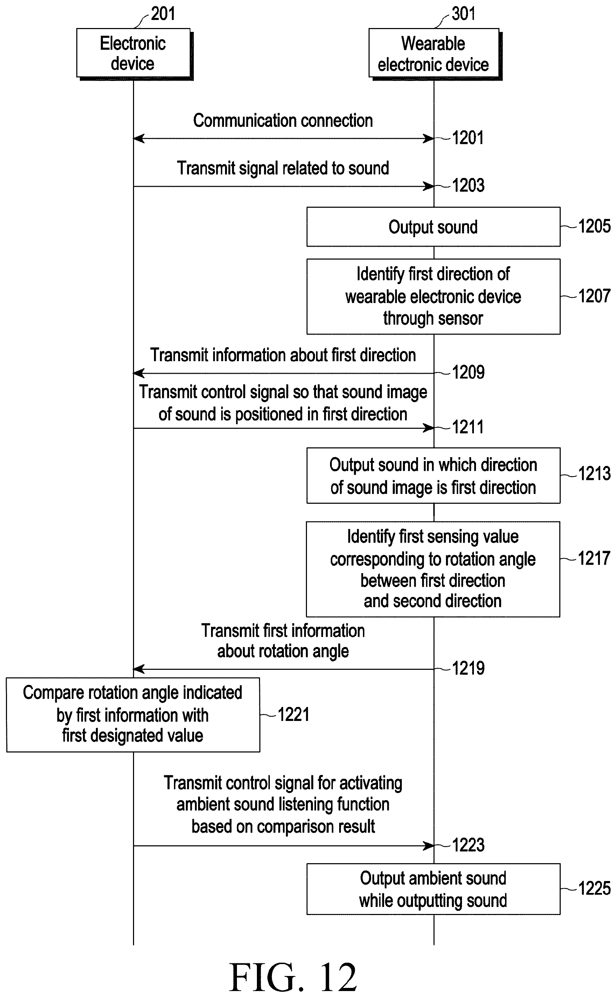

For convenience of description, it is described below in FIGS. 4 to 11 that the wearable electronic device 301 independently performs the operation of activating the ambient sound listening function by the wearable electronic device 301 without the control of the electronic device 201. It is described below in FIG. 12 that the wearable electronic device 301 performs the operation of activating the ambient sound listening function of the wearable electronic device 301 based on the operation of receiving a control signal from the electronic device 201. The operations of FIGS. 4 to 11 may be performed by the wearable electronic device 301 based on a control signal received from the electronic device 201 by the wearable electronic device 301 of FIG. 12.

FIG. 4 is a flowchart illustrating an operation of a wearable electronic device based on rotation of the wearable electronic device according to an embodiment.

Referring to FIG. 4, according to an embodiment, in operation 411, the wearable electronic device 301 (e.g., the wearable electronic device 301 of FIG. 3) may output sound through the output device 360 (e.g., the output device 360 of FIG. 3) based on a signal (e.g., a voice signal) obtained from the electronic device 201 (e.g., the electronic device 201 of FIG. 3) through the communication module 390 (e.g., the communication module 390 of FIG. 3). According to an embodiment, the wearable electronic device 301 may be communicatively connected to the electronic device 201. According to an embodiment, the electronic device 201 may reproduce content (e.g., a movie, music, or video) through the display 260 (e.g., the display 260 of FIG. 3) or may make a call connection to an external electronic device. According to an embodiment, the electronic device 201 may transmit a signal (e.g., a voice signal) based on the content or call to the wearable electronic device 301 through the communication module 290 (e.g., the communication module 290 of FIG. 3). According to an embodiment, the wearable electronic device 301 may output sound based on the signal received from the electronic device 201 through the communication module 390 through the output device 360.

According to an embodiment, in operation 413, the wearable electronic device 301 may identify the first direction of the wearable electronic device 301 worn by the user through the sensor 376 (e.g., the sensor 376 of FIG. 3) while outputting sound. According to an embodiment, the first direction may mean the forward direction of the user wearing the wearable electronic device 301 or the direction in which the user wearing the wearable electronic device 301 faces the electronic device 201. The wearable electronic device 301 may identify the first direction through the sensor 376 before outputting the sound. According to an embodiment, the wearable electronic device 301 may identify whether the wearable electronic device 301 rotates from the first direction.

According to an embodiment, the wearable electronic device 301 may output notification information for the user wearing the wearable electronic device 301 to face forward or the electronic device 201 for a specified time through the output device 360. According to an embodiment, the electronic device 201 may output notification information for the user wearing the wearable electronic device 301 to face forward or the electronic device 201 through the display 260.

According to an embodiment, when it is identified that the user looks in the specific direction for a specified time through the sensor 376, the wearable electronic device 301 may identify the specific direction as the first direction. According to an embodiment, the wearable electronic device 301 may determine the first direction as the forward direction of the user wearing the wearable electronic device 301 or the direction in which the user wearing the wearable electronic device 301 faces the electronic device 201.

According to an embodiment, in operation 415, the wearable electronic device 301 may identify whether the wearable electronic device 301 rotates from the first direction through the sensor 376. According to an embodiment, the wearable electronic device 301 may identify that the wearable electronic device 301 is rotated to the second direction through the sensor 376. According to an embodiment, the second direction may mean a direction to which the head of the user wearing the wearable electronic device 301 (or the wearable electronic device 301) is rotated from the first direction. For example, the second direction may mean a right direction, a left direction, an upper direction, or a lower direction of the first direction. According to an embodiment, the wearable electronic device 301 may identify whether the wearable electronic device 301 rotates through the sensor 376 in real-time.

According to an embodiment, in operation 417, the wearable electronic device 301 may identify a first sensing value corresponding to the rotation angle indicating the degree of rotation between the first direction and the second direction.

According to an embodiment, in operation 421, the wearable electronic device 301 may identify whether the rotation angle indicated by the first sensing value is larger than the first specified value. According to an embodiment, when rotation of the wearable electronic device 301 is identified, the wearable electronic device 301 may determine whether the rotation angle indicated by the sensing value obtained through the sensor 376 is larger than the first specified value. According to an embodiment, the first specified value may mean a rotation angle for determining whether to activate the ambient sound listening function. The first specified value may be set by the processor 320 or may be set by the user.

According to an embodiment, when it is identified that the rotation angle indicated by the first sensing value is larger than the first specified value (operation 421-Yes), the wearable electronic device 301 may activate the ambient sound listening function in operation 423. According to an embodiment, when the ambient sound listening function is activated, the wearable electronic device 301 may output the ambient sound of the wearable electronic device 301 obtained through the microphone 350 (e.g., the microphone 350 of FIG. 3) while outputting the sound through the output device 350. Alternatively, according to an embodiment, when the ambient sound listening function is activated, the wearable electronic device 301 may output ambient sound through the output device 360 without outputting sound.

According to an embodiment, when it is identified that the rotation angle indicated by the first sensing value is not larger than the first specified value (operation 421-No), the wearable electronic device 301 may continue to output only the sound in operation 425. According to an embodiment, when it is identified that the rotation angle indicated by the first sensing value is not larger than the first specified value, the wearable electronic device 301 may not activate the ambient sound listening function. According to an embodiment, the wearable electronic device 301 may continue to output only the sound through the output device 360. Accordingly, the wearable electronic device 301 may provide the user with an environment in which the user may focus on and listen to the sound related to the call or content.

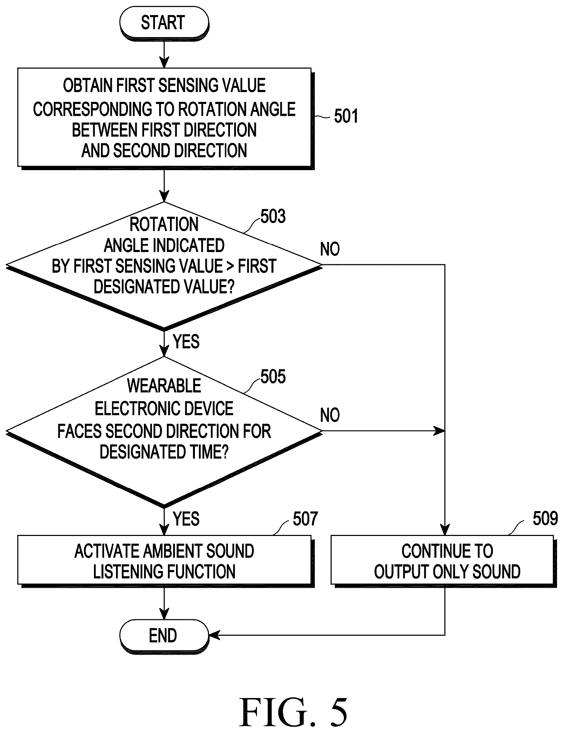

FIG. 5 is a flowchart illustrating an operation of a wearable electronic device when the wearable electronic device according to an embodiment rotates by more than a specified rotation angle for a specified time period.

Referring to FIG. 5, according to an embodiment, in operation 501, the wearable electronic device 301 (e.g., the wearable electronic device 301 of FIG. 3) may obtain the first sensing value corresponding to the rotation angle indicating the degree of rotation between the first direction and the second direction through the sensor 376 (e.g., the sensor 376 of FIG. 3).

According to an embodiment, in operation 503, the wearable electronic device 301 may identify whether the rotation angle indicated by the first sensing value is larger than the first specified value.

According to an embodiment, when it is identified that the rotation angle indicated by the first sensing value is not larger than the first specified value (operation 503-No), the wearable electronic device 301 may continue to output only the sound in operation 509. According to an embodiment, when it is identified that the rotation angle indicated by the first sensing value is not larger than the first specified value, the wearable electronic device 301 may not activate the ambient sound listening function. According to an embodiment, based on the ambient sound listening function being not activated, the wearable electronic device 301 may output only the sound through the output device 360 without outputting the ambient sound.

According to an embodiment, when it is identified that the rotation angle indicated by the first sensing value is larger than the first specified value (operation 503-Yes), in operation 505, the wearable electronic device 301 may identify whether the wearable electronic device 301 is facing the second direction for a specified time from the time when the rotation angle indicated by the first sensing value is identified to be larger than the first specified value. According to an embodiment, the specified time may mean a time for determining whether to activate the ambient sound listening function. The specified time may be set by the processor 320 or may be set by the user.

According to an embodiment, when it is identified that the wearable electronic device 301 faces the second direction for the specified time (operation 505-Yes), the wearable electronic device 301 may activate the ambient sound listening function in operation 507. According to an embodiment, when the ambient sound listening function is activated, the wearable electronic device 301 may output the ambient sound of the wearable electronic device 301 obtained through the microphone 350 (e.g., the microphone 350 of FIG. 3) while outputting the sound through the output device 350. According to an embodiment, when the ambient sound listening function is activated, the wearable electronic device 301 may output ambient sound through the output device 360 without outputting sound.

According to an embodiment, when it is identified that the wearable electronic device 301 does not face the second direction for the specified time (operation 505-No), the wearable electronic device 301 may continue to output only the sound in operation 509. According to an embodiment, when it is identified that wearable electronic device 301 does not face the second direction for the specified time, the wearable electronic device 301 may not activate the ambient sound listening function.

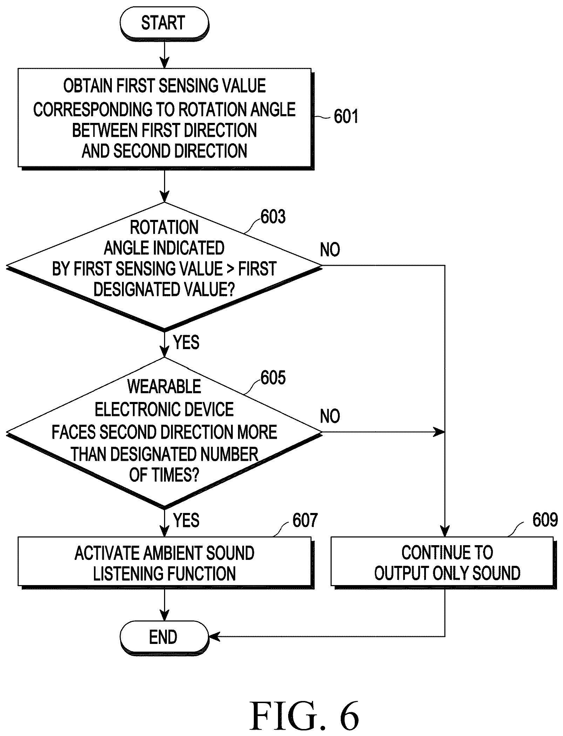

FIG. 6 is a flowchart illustrating an operation of a wearable electronic device when the wearable electronic device according to an embodiment rotates by more than a specified rotation angle more than a specified number of times.

Referring to FIG. 6, according to an embodiment, in operation 601, the wearable electronic device 301 (e.g., the wearable electronic device 301 of FIG. 3) may obtain the first sensing value corresponding to the rotation angle between the first direction and the second direction through the sensor 376 (e.g., the sensor 376 of FIG. 3).

According to an embodiment, in operation 603, the wearable electronic device 301 may identify whether the rotation angle indicated by the first sensing value is larger than the first specified value.

According to an embodiment, when it is identified that the rotation angle indicated by the first sensing value is smaller than the first specified value (operation 603-No), the wearable electronic device 301 may continue to output only the sound without activating the ambient sound listening function in operation 609.

According to an embodiment, when it is identified that the rotation angle indicated by the first sensing value is larger than the first specified value (operation 603-Yes), in operation 605, the wearable electronic device 301 may identify whether the wearable electronic device 301 is facing the second direction more than a specified number of times. According to an embodiment, the specified number of times may mean the number of times for determining whether the wearable electronic device 301 activates the ambient sound listening function. According to an embodiment, the specified number of times may be preset by the user or may be set by the processor 320.

According to an embodiment, when it is identified that the wearable electronic device 301 faces the second direction more than the specified number of times (operation 605-Yes), the wearable electronic device 301 may activate the ambient sound listening function in operation 607. According to an embodiment, the wearable electronic device 301 may output the ambient sound of the wearable electronic device 301 obtained through the microphone 350 (e.g., the microphone 350 of FIG. 3) while outputting the sound through the output device 350. According to an embodiment, the wearable electronic device 301 may output ambient sound through the output device 360 without outputting sound.

According to an embodiment, when it is identified that the wearable electronic device 301 does not face the second direction more than the specified number of times (operation 605-No), the wearable electronic device 301 may continue to output only the sound without activating the ambient sound listening function in operation 609.

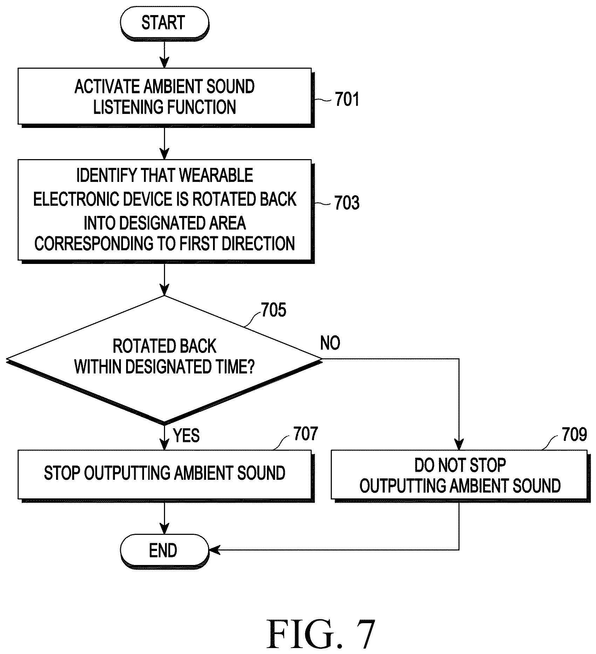

FIG. 7 is a flowchart illustrating an operation of a wearable electronic device when the wearable electronic device according to an embodiment activates an ambient sound listening function and then rotates back to a previous direction (e.g., the first direction).

Referring to FIG. 7, according to an embodiment, the wearable electronic device 301 (e.g., the wearable electronic device 301 of FIG. 3) may identify the rotation of the wearable electronic device 301 through the sensor (e.g., the sensor 376 of FIG. 3). The wearable electronic device 301 may identify the degree of rotation of the wearable electronic device 301 from the first direction.

According to an embodiment, in operation 701, when it is identified that the rotation angle between the first direction (e.g., the pre-rotation direction) and the second direction (e.g., the post-rotation direction) is larger than the first specified value, the wearable electronic device 301 may activate the ambient sound listening function.

According to an embodiment, in operation 703, the wearable electronic device 301 may identify that the wearable electronic device 301 is rotated back into the specified area corresponding to the first direction through the sensor 376 after the ambient sound listening function is activated according to the above-described method.

According to an embodiment, in operation 705, the wearable electronic device 301 may identify whether the wearable electronic device 301 is rotated back into the specified area corresponding to the first direction within the specified time from the time when the ambient sound listening function is activated. The specified area may be an area based on the first specified value (e.g., an angle value) from the first direction. For example, when the first specified value is 45 degrees, the wearable electronic device 301 may determine the first direction as 0 degrees and set an area formed by 45 degrees in the right direction of the first direction and 45 degrees in the left direction of the first direction as the specified area.

According to an embodiment, when the wearable electronic device 301 is rotated back into the specified area corresponding to the first direction within the specified time from the time when the ambient sound listening function is activated (operation 705-Yes), in operation 707, the wearable electronic device 301 may deactivate the ambient sound listening function to stop the output of the ambient sound. The specified time may be set by the user or may be set by the processor 320.

According to an embodiment, when the wearable electronic device 301 is not rotated back into the specified area corresponding to the first direction within the specified time from the time when the ambient sound listening function is activated (operation 705-No), the output of the ambient sound in operation 709 may not be stopped. According to an embodiment, when the wearable electronic device 301 is rotated back into the specified area corresponding to the first direction after the specified time, the wearable electronic device 301 may stop outputting the ambient sound based on the user's input of stopping outputting the ambient sound.

According to the implementation, when the wearable electronic device 301 is rotated back into the specified area corresponding to the first direction after the specified time, the wearable electronic device 301 may stop outputting the ambient sound.

According to an embodiment, when the wearable electronic device 301 is rotated back into the specified area corresponding to the first direction from the second direction, the wearable electronic device 301 may deactivate the ambient sound listening function. Accordingly, the wearable electronic device 301 may provide the user with an environment in which the user may focus on and listen to the sound related to content.

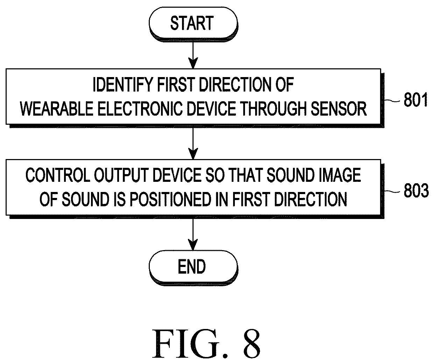

FIG. 8 is a flowchart illustrating an operation of controlling an output device so that a wearable electronic device according to an embodiment positions a sound image of sound in a first direction.

Referring to FIG. 8, according to an embodiment, in operation 801, the wearable electronic device 301 (e.g., the wearable electronic device 301 of FIG. 3) may identify the first direction of the wearable electronic device 301 through the sensor 376 (e.g., the sensor 376 of FIG. 3).

According to an embodiment, in operation 803, the wearable electronic device 301 may control the output device 360 so that the sound image of sound output through the output device 360 (e.g., the output device 360 of FIG. 3) is positioned in the first direction.

According to an embodiment, the wearable electronic device 301 may execute the spatialized audio function based on head tracking technology. The spatialized audio function based on head tracking technology may mean a function of controlling the position of the sound image of sound to be positioned in a specific direction (e.g., the first direction) even when the user's head wearing the wearable electronic device 301 is rotated from the specific direction (e.g., the first direction) to a specific direction. When the spatialized audio function based on head tracking technology is executed, the user may feel that sound is output from the first direction. According to an embodiment, when the spatialized audio function is executed, the wearable electronic device 301 may output the sound in which the sound image direction is positioned in the first direction even when the wearable electronic device 301 rotates to the specific direction. For example, the user wearing the wearable electronic device 301 may feel that sound is output from the user's left direction even when the wearable electronic device 301 rotates from the first direction to the right direction. For example, the user wearing the wearable electronic device 301 may feel that sound is output from the user's lower direction even when rotating from the first direction to the upper direction.

According to an embodiment, when the wearable electronic device 301 is rotated to the second direction to have a rotation angle larger than the first specified value from the first direction, the wearable electronic device 301 may control the output device 360 so that the sound image of the ambient sound is positioned in the second direction. According to an embodiment, the user wearing the wearable electronic device 301 may feel that sound is output from the first direction and the ambient sound of the wearable electronic device 301 is output from the second direction. According to an embodiment, the wearable electronic device 301 may control (e.g., dual mono) the output device 360 so that the sound image of the ambient sound is positioned at the position (e.g., the position of the user's head) of the user of the wearable electronic device 301. For example, the user may feel that ambient sound is output from the user's body (e.g., head). Accordingly, the wearable electronic device 301 may provide the user with an environment in which the user may focus on the ambient sound.

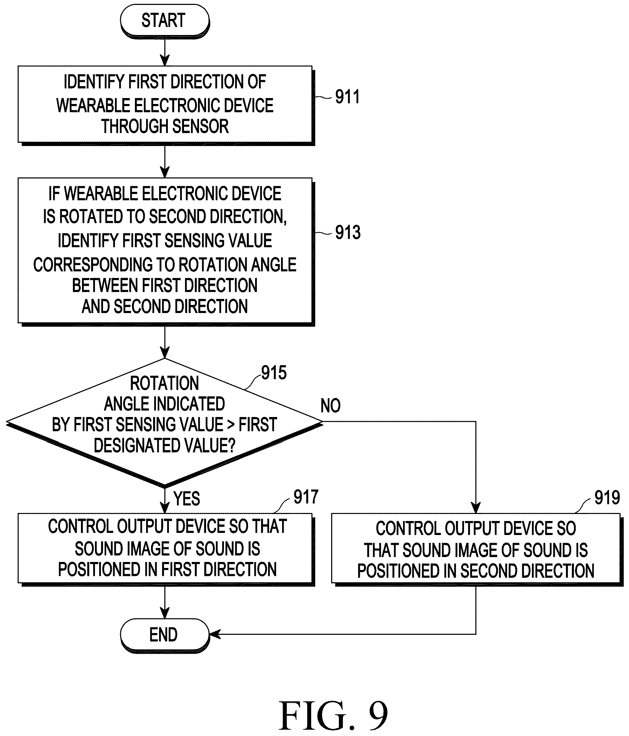

FIG. 9 is a flowchart illustrating an operation of determining a sound image of sound based on a rotation angle by a wearable electronic device according to an embodiment.

Referring to FIG. 9, according to an embodiment, in operation 911, the wearable electronic device 301 (e.g., the wearable electronic device 301 of FIG. 3) may identify the first direction of the wearable electronic device 301 through the sensor 376 (e.g., the sensor 376 of FIG. 3).

According to an embodiment, in operation 913, when the wearable electronic device 301 rotates to the second direction, the wearable electronic device 301 may identify a first sensing value corresponding to the rotation angle between the first direction and the second direction.

According to an embodiment, in operation 915, the wearable electronic device 301 may identify whether the rotation angle indicated by the first sensing value is larger than the first specified value. According to an embodiment, the first specified value may mean a rotation angle for determining whether to activate the ambient sound listening function.

According to an embodiment, when it is identified that the rotation angle indicated by the first sensing value is larger than the first specified value (operation 915-Yes), in operation 917, the wearable electronic device 301 may activate the ambient sound listening function and control the output device 360 so that the sound image of sound output through the output device 360 (e.g., the output device 360 of FIG. 3) is positioned in the first direction. According to an embodiment, the wearable electronic device 301 may output the ambient sound in which the direction of the sound image is positioned in the second direction, and output the sound in which the direction of the sound image is positioned in the first direction. According to an embodiment, the wearable electronic device 301 may control (e.g., dual mono) the output device 360 so that the sound image of the ambient sound is positioned at the position (e.g., the position of the user's head) of the user. For example, the user may feel that ambient sound is output from the user's body (e.g., head).

According to an embodiment, when it is identified that the rotation angle indicated by the first sensing value is smaller than the first specified value (operation 915-No), in operation 919, the wearable electronic device 301 may control the output device 360 so that the sound image of sound output through the output device 360 is positioned in the second direction. According to an embodiment, the wearable electronic device 301 positions the sound image of sound in the direction (e.g., the second direction) viewed by the user, so that the user may feel that the sound of the content is output from the direction viewed by the user.

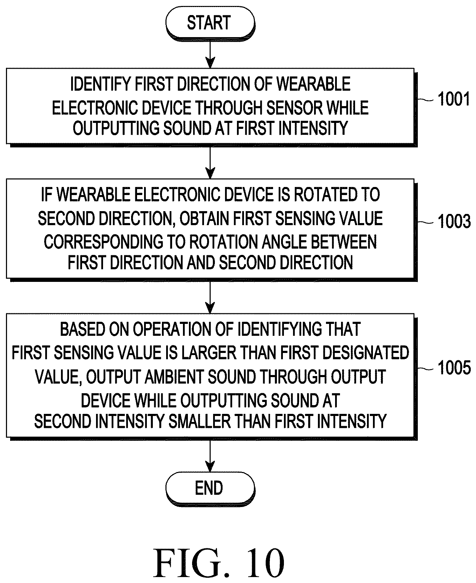

FIG. 10 is a flowchart illustrating an operation of adjusting the volume of sound based on activation of an ambient sound listening function by a wearable electronic device according to an embodiment.

Referring to FIG. 10, according to an embodiment, in operation 1001, the wearable electronic device 301 (e.g., the wearable electronic device 301 of FIG. 3) may identify the first direction of the wearable electronic device 301 through the sensor 376 (e.g., the sensor 376 of FIG. 3) while outputting the sound received from the electronic device 201 (e.g., the electronic device 201 of FIG. 3) at the first intensity.

According to an embodiment, in operation 1003, when the wearable electronic device 301 rotates to the second direction, the wearable electronic device 301 may obtain a first sensing value corresponding to the rotation angle between the first direction and the second direction.

According to an embodiment, in operation 1005, the wearable electronic device 301 may output the ambient sound through the output device 360 while outputting the sound at the second intensity smaller than the first intensity based on the operation of identifying that the first sensing value is larger than the first specified value.

According to an embodiment, when it is identified that the first sensing value is larger than the first specified value and the wearable electronic device 301 faces the second direction for a specified time, the wearable electronic device 301 may output the ambient sound through the output device 360 while outputting the sound at the second intensity smaller than the first intensity.

According to an embodiment, when it is identified that the first sensing value is larger than the first specified value and the wearable electronic device 301 faces the second direction more than a specified number of times, the wearable electronic device 301 may output the ambient sound through the output device 360 while outputting the sound at the second intensity smaller than the first intensity.

According to an embodiment, the wearable electronic device 301 may adjust and output the output intensity of the ambient sound to be larger than the second intensity of the sound. According to an embodiment, the wearable electronic device 301 may set the output intensity of the ambient sound to be equal to or smaller than the output intensity of the sound.

According to an embodiment, when the wearable electronic device 301 is rotated back into the specified area corresponding to the first direction within the specified time from the time when the ambient sound listening function is activated, the wearable electronic device 301 may output the sound at the previous first intensity.

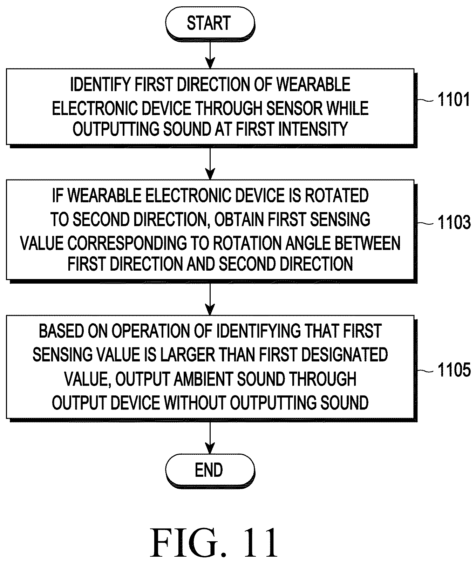

FIG. 11 is a flowchart illustrating an operation of stopping outputting sound based on activation of an ambient sound listening function by a wearable electronic device according to an embodiment.

Referring to FIG. 11, according to an embodiment, in operation 1101, the wearable electronic device 301 (e.g., the wearable electronic device 301 of FIG. 3) may identify the first direction of the wearable electronic device 301 through the sensor 376 (e.g., the sensor 376 of FIG. 3) while outputting the sound received from the electronic device 201 (e.g., the electronic device 201 of FIG. 3) at the first intensity. According to an embodiment, the wearable electronic device 301 may identify the first direction before outputting the sound. According to an embodiment, the electronic device 201 may reproduce content (e.g., a movie, music, or video) through the display 260 (e.g., the display 260 of FIG. 3) or may make a call (e.g., a regular call or a video call) connection to an external electronic device. According to an embodiment, the electronic device 201 may transmit a signal (e.g., a voice signal) based on the content or call (e.g., a regular call or a video call) to the wearable electronic device 301 through the communication module 290 (e.g., the communication module 290 of FIG. 3). According to an embodiment, the wearable electronic device 301 may output the sound based on the signal received through the output device 360.

According to an embodiment, in operation 1103, when the wearable electronic device 301 rotates to the second direction, the wearable electronic device 301 may obtain a first sensing value corresponding to the rotation angle between the previous first direction and the rotated second direction.

According to an embodiment, in operation 1105, the wearable electronic device 301 may activate the ambient sound listening function based on the operation of identifying that the first sensing value is larger than the first specified value, and output the ambient sound through the output device 360 without outputting the sound. According to an embodiment, when it is identified that the first sensing value is larger than the first specified value, the wearable electronic device 301 may stop (or pause) reproduction of the content (e.g., a movie, music, or video). According to an embodiment, the wearable electronic device 301 may not output the sound based on the stop of the content. According to an embodiment, the wearable electronic device 301 may transmit a signal requesting to stop reproducing the content to the electronic device 201. According to an embodiment, when the wearable electronic device 301 is rotated from the second direction to the first direction, the wearable electronic device 301 may transmit a signal requesting to re-perform content reproduction to the electronic device 201.

It is described below in FIG. 12 that the wearable electronic device 301 performs the operation of outputting the ambient sound of the wearable electronic device 301 based on the operation of receiving a control signal from the electronic device 201. At least some of the operations of FIGS. 4 to 11 may be performed by the wearable electronic device 301 based on a control signal received from the electronic device 201 by the wearable electronic device 301 of FIG. 12.

FIG. 12 is a flowchart illustrating an operation of controlling a wearable electronic device when rotation is detected through the wearable electronic device by an electronic device according to an embodiment.

Referring to FIG. 12, according to an embodiment, in operation 1201, the wearable electronic device 301 may be communicatively connected to the electronic device 201.

According to an embodiment, in operation 1203, the electronic device 201 may transmit a voice signal related to the sound to the wearable electronic device 301 through the communication module 290 (e.g., the communication module 290 of FIG. 3). According to an embodiment, the electronic device 201 may reproduce content (e.g., a movie, music, or video) through the display 260 (e.g., the display 260 of FIG. 3) or may make a call connection to an external electronic device. According to an embodiment, when the content is reproduced or a call is connected to the external electronic device, the electronic device 201 may transmit a voice signal based on the call or the content to the wearable electronic device 301.

According to an embodiment, in operation 1205, the wearable electronic device 301 may output the sound based on the received signal through the output device 360 (e.g., the output device 360 of FIG. 3) at the first intensity.

According to an embodiment, in operation 1207, the wearable electronic device 301 may identify the first direction of the wearable electronic device 301 worn by the user through the sensor 376 (e.g., the sensor 376 of FIG. 3) while outputting sound at the first intensity. According to an embodiment, the first direction may mean the forward direction of the user wearing the wearable electronic device 301 or the direction in which the user wearing the wearable electronic device 301 faces the electronic device 301. According to an embodiment, the wearable electronic device 301 may output notification information for the user wearing the wearable electronic device 301 to face forward or the electronic device 301 for a specified time through the output device 360. According to an embodiment, the electronic device 201 may output notification information for the user wearing the wearable electronic device 301 to face forward or the electronic device 201 through the display 260. According to an embodiment, when it is identified that the specific direction is viewed for a specified time through the sensor 376, the wearable electronic device 301 may identify the specific direction as the first direction.

According to an embodiment, in operation 1209, the wearable electronic device 301 may transmit information about the first direction to the electronic device 201. According to an embodiment, the electronic device 201 may store the first direction as the reference direction for determining the degree of rotation of the wearable electronic device 301 based on the information about the first direction.

According to an embodiment, in operation 1211, the electronic device 201 may transmit a control signal to the wearable electronic device 301 so that the sound image of sound is positioned in the first direction. According to an embodiment, the electronic device 201 may execute the spatialized audio function based on head tracking technology. The spatialized audio function based on head tracking technology may mean a function of controlling the position of the sound image of sound to be positioned in the first direction even when the user's head wearing the wearable electronic device 301 is rotated from the first direction to the second direction. When the spatialized audio function based on head tracking technology is executed, the user may feel that sound is output from the reference direction. According to an embodiment, when the spatialized audio function based on head tracking technology is executed, the electronic device 201 may control the wearable electronic device 301 to output the sound of the sound image in the previous first direction even when the wearable electronic device 301 rotates.

According to an embodiment, in operation 1213, the wearable electronic device 301 may output the sound in which the direction of the sound image is the first direction under the control of the electronic device 201.

According to an embodiment, in operation 1217, based on the wearable electronic device 301 rotating from the first direction to the second direction, the wearable electronic device 301 may identify a first sensing value corresponding to the rotation angle between the first direction and the second direction.

According to an embodiment, in operation 1219, the wearable electronic device 301 may transmit first information (e.g., information about the first sensing value) about the rotation angle to the electronic device 201 through the communication module 390.

According to an embodiment, in operation 1221, the electronic device 201 may compare the rotation angle indicated by the first information with the first specified value. According to an embodiment, the first specified value may mean a rotation angle for determining whether to activate the ambient sound listening function.

Alternatively, according to an embodiment, the wearable electronic device 301 may transmit the sensing value obtained through the sensor 376 to the electronic device 201 in real-time. According to an embodiment, the electronic device 201 may identify the rotation angle corresponding to the received sensing value.

According to an embodiment, in operation 1223, the electronic device 201 may transmit the control signal for activating the ambient sound listening function to the wearable electronic device 301 based on the comparison result. In other words, when it is identified that the wearable electronic device 301 is rotated more times than the first specified value, the electronic device 201 may transmit a control signal to activate the ambient sound listening function. For example, when it is identified that the rotation angle is larger than the first specified value, the electronic device 201 may transmit the control signal for activating the ambient sound listening function to the wearable electronic device 301. In this case, the electronic device 201 may transmit the control signal for outputting sound at the second intensity smaller than the first intensity to the wearable electronic device 301. According to an embodiment, the electronic device 201 may transmit the control signal for stopping reproduction of content so as not to output sound to the wearable electronic device 301. The electronic device 201 may transmit the control signal for outputting the ambient sound in which the direction of the sound image is the second direction to the wearable electronic device 301. According to an embodiment, the electronic device 201 may transmit the control signal for outputting ambient sound in which the position of the sound image is the position of the user (e.g., the position of the user's head), to the wearable electronic device 301.

According to an embodiment, in operation 1225, the wearable electronic device 301 may output the ambient sound while outputting the sound. According to an embodiment, the wearable electronic device 301 may output the sound at the second intensity based on the control signal for outputting the sound at the second intensity smaller than the first intensity. According to an embodiment, the wearable electronic device 301 may not output sound based on the control signal for stopping reproduction of content so as not to output sound. According to an embodiment, the wearable electronic device 301 may control the output device 360 to output the ambient sound in which the sound image is in the second direction. According to an embodiment, the wearable electronic device 301 may control (e.g., dual mono) the output device 360 to output the ambient sound, in which the position of the sound image is the position of the user (e.g., the position of the user's head). For example, the user may feel that ambient sound is output from the user's body (e.g., head).

According to an embodiment, when it is identified that the rotation angle is smaller than the first specified value based on the comparison result, the electronic device 201 may not transmit the control signal for activating the ambient sound listening function to the wearable electronic device 301. According to an embodiment, the wearable electronic device 301 may output only the sound in which the sound image is positioned in the first direction based on not receiving the control signal. According to an embodiment, when it is identified that the rotation angle of the wearable electronic device 301 is smaller than the first specified value, the electronic device 201 may transmit a control signal to the wearable electronic device 301 for the wearable electronic device 301 to output the sound in which the sound image is positioned in the rotated second direction. According to an embodiment, the wearable electronic device 201 may control the output device 360 to output the sound in which the sound image is in the second direction based on the control signal.

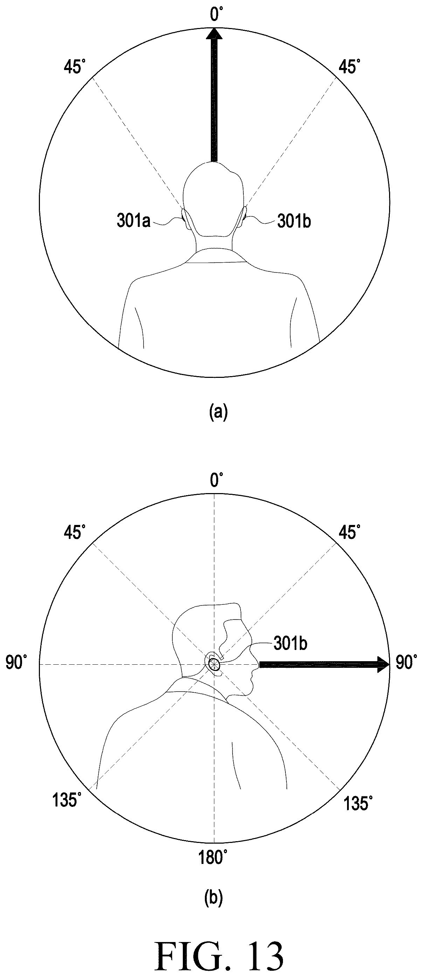

FIG. 13 is a view illustrating an operation of a wearable electronic device based on a rotation angle of the wearable electronic device according to an embodiment.

Referring to FIG. 13(a), the wearable electronic devices 301a and 301b (e.g., the wearable electronic devices 301a and 301b of FIG. 2) according to an embodiment may output sound based on the signal obtained from the electronic device 201 (e.g., the electronic device 201 of FIG. 3). According to an embodiment, the wearable electronic devices 301a and 301b may identify the first direction through the sensor 376 (e.g., the sensor 376 of FIG. 3). According to an embodiment, the wearable electronic devices 301a and 301b may set the first direction to 0 degrees. For example, the first direction may refer to the direction in which the user wearing the wearable electronic devices 301a and 301b views the content displayed on the display 260 (e.g., the display 260 of FIG. 3) of the electronic device 201 or views forward.

According to an embodiment, the wearable electronic devices 301a and 301b may execute a spatialized audio function based on head tracking technology. The spatialized audio function based on head tracking technology may mean a function of controlling the position of the sound image of sound to be positioned in the first direction even when the user's head wearing the wearable electronic devices 301a and 301b is rotated from the first direction to a specific direction. When the spatialized audio function based on head tracking technology is executed, the user wearing the wearable electronic devices 301a and 301b may feel that sound is output from the first direction. For example, the user wearing wearable electronic devices 301a and 301b may feel that sound is output from the forward direction before rotating his head. The user wearing the wearable electronic devices 301a and 301b may feel that sound is output from the user's left direction after rotating his head to the right.

According to an embodiment, when the wearable electronic devices 301a and 301b rotate to the second direction through the sensor 376, it may identify whether the rotation angle indicating the degree of rotation between the first direction and the second direction is larger than the first specified value. For example, the first specified value may be 45 degrees. For example, the rotation angle between the first direction and the second direction may be 45 degrees.

According to an embodiment, when it is identified that the rotation angle (e.g., 30 degrees) between the first direction and the second direction is smaller than the first specified value, the wearable electronic devices 301a and 301b may not activate the ambient sound listening function of the wearable electronic devices 301a and 301b. According to an embodiment, each of the wearable electronic devices 301a and 301b may output only the sound in which the direction of the sound image is the first direction through the output device 360 (e.g., the output device 360 of FIG. 3). Accordingly, the wearable electronic devices 301a and 301b may provide information in which sound is output from the first direction to the user.

According to the implementation, when it is identified that the rotation angle (e.g., 30 degrees) between the first direction and the second direction is smaller than the first specified value, the wearable electronic devices 301a and 301b may output the sound in which the direction of the sound image is positioned in the second direction through the output device 360. Accordingly, the wearable electronic devices 301a and 301b may provide the user with the vivid sound output from the second direction currently viewed by the user.

Referring to FIG. 13(b), according to an embodiment, the wearable electronic devices 301a and 301b may identify that the rotation angle between the first direction and the second direction is 90 degrees through the sensor 376. When it is identified that the rotation angle (e.g., 90 degrees) between the first direction and the second direction is larger than the first specified value (e.g., 45 degrees), the wearable electronic devices 301a and 301b may activate the ambient sound listening function.

According to an embodiment, when the ambient sound listening function is activated, the wearable electronic devices 301a and 301b may output the ambient sound while outputting the sound. The wearable electronic devices 301a and 301b may output the ambient sound in which the direction of the sound image is positioned in the second direction. Accordingly, it is possible to provide the user with the vivid output of ambient sound from the second direction. According to an embodiment, the wearable electronic device 301 may control the output device 360 so that the sound image of the ambient sound is positioned at the position (e.g., the position of the user's head) of the user. For example, the user may feel that ambient sound is output from the user's body (e.g., head). However, this is an example, and the wearable electronic devices 301a and 301b of the embodiments of the present invention may control the sound image of the ambient sound to be positioned at various positions or directions.

According to an embodiment, the wearable electronic devices 301a and 301b may identify that the wearable electronic devices 301a and 301b are rotated back into the specified area corresponding to the first direction from the time when the ambient sound listening function is activated. For example, the specified area may be an area formed by 45 degrees in the right direction and 45 degrees in the left direction with respect to 0 degrees. According to an embodiment, when the wearable electronic devices 301a and 301b are rotated back into the specified area corresponding to the first direction, the wearable electronic devices 301a and 301b may deactivate the ambient sound listening function.

A wearable electronic device 301 according to an embodiment may comprise memory storing instructions, a communication module 390, a sensor 376, a microphone 350, an output device 360, and a processor 320.

In the wearable electronic device 301 according to an embodiment, the instructions may, when executed by the processor 320, cause the wearable electronic device 301 to output sound through the output device 360 based on a signal obtained from an electronic device through the communication module 390.

According to an embodiment, the processor 320 may be operatively connected to the memory, the communication module 390, the sensor 376, the microphone 350, and the output device 360.

In the wearable electronic device 301 according to an embodiment, the instructions may, when executed by the processor 320, cause the wearable electronic device 301 to while outputting the sound, identify a first direction of the wearable electronic device 301 worn by a user through the sensor 376.

In the wearable electronic device 301 according to an embodiment, the instructions may, when executed by the processor 320, cause the wearable electronic device 301 to, when identifying, through the sensor 376, that the wearable electronic device 301 is rotated from the first direction to a second direction, identify a first sensing value corresponding to a rotation angle between the first direction and the second direction.

In the wearable electronic device 301 according to an embodiment, the instructions may, when executed by the processor 320, cause the wearable electronic device 301 to, based on identifying that the rotation angle indicated by the first sensing value is larger than a first specified value, output ambient sound of the wearable electronic device 301 obtained through the microphone 350 through the output device 360.

In the wearable electronic device 301 according to an embodiment, the instructions may, when executed by the processor 320, cause the wearable electronic device 301 to, when it is identified, within a specified time from a time of outputting the ambient sound through the output device 360, that the wearable electronic device 301 is rotated back into a specified area corresponding to the first direction, stop outputting the ambient sound.

In the wearable electronic device 301 according to an embodiment, the instructions may, when executed by the processor 320, cause the wearable electronic device 301 to, when it is identified that the wearable electronic device 301 faces the second direction for a specified time from a time when the rotation angle is identified to be larger than the first specified value, output the ambient sound through the output device 360.

In the wearable electronic device 301 according to an embodiment, the instructions may, when executed by the processor 320, cause the wearable electronic device 301 to, when it is identified that the wearable electronic device 301 faces the second direction more than a specified number of times, output the ambient sound through the output device 360.

In the wearable electronic device 301 according to an embodiment, the instructions may, when executed by the processor 320, cause the wearable electronic device 301 to, when the wearable electronic device 301 faces the first direction, control the output device 360 so that a sound image of the sound is positioned in the first direction.

In the wearable electronic device 301 according to an embodiment, the instructions may, when executed by the processor 320, cause the wearable electronic device 301 to, based on, identifying that the wearable electronic device 301 is rotated to the second direction and that the rotation angle is not larger than the first specified value, control the output device 360 so that the sound image of the sound is positioned in the second direction.

In the wearable electronic device 301 according to an embodiment, the instructions may, when executed by the processor 320, cause the wearable electronic device 301 to, based on identifying that the wearable electronic device 301 is rotated to the second direction and that the rotation angle is larger than the first specified value, control the output device 360 so that the sound image of the sound is positioned in the first direction.

In the wearable electronic device 301 according to an embodiment, the instructions may, when executed by the processor 320, cause the wearable electronic device 301 to, when it is identified that the rotation angle indicated by the first sensing value is larger than a second specified value, stop outputting the sound.

In the wearable electronic device 301 according to an embodiment, the instructions may, when executed by the processor 320, cause the wearable electronic device 301 to, based on identifying that the rotation angle indicated by the sensing value is larger than the first specified value while outputting the sound at a first intensity, output the ambient sound through the output device 360 while outputting the sound at a second intensity smaller than the first intensity.

In the wearable electronic device 301 according to an embodiment, the instructions may, when executed by the processor 320, cause the wearable electronic device 301 to, when it is identified that a rotation speed from the first direction to a third direction is larger than a third specified value, output the ambient sound of the wearable electronic device 301.

A method for operating a wearable electronic device 301 according to an embodiment may comprise outputting sound through an output device 360 included in the wearable electronic device 301 based on a signal obtained from an electronic device 201 through a communication module 390 included in the wearable electronic device 301.

The method for operating the wearable electronic device 301 according to an embodiment may comprise identifying a first direction of the wearable electronic device 301 worn by a user through a sensor 376 included in the wearable electronic device 301 while outputting the sound.

The method for operating the wearable electronic device 301 according to an embodiment may comprise, when identifying, through the sensor 376, that the wearable electronic device 301 is rotated from the first direction to a second direction, obtaining a first sensing value corresponding to a rotation angle between the first direction and the second direction.

The method for operating the wearable electronic device 301 according to an embodiment may comprise, based on identifying that the rotation angle indicated by the first sensing value is larger than a first specified value, outputting ambient sound of the wearable electronic device 301 obtained through a microphone 350 included in the wearable electronic device 301 through the output device 360.

The method for operating the wearable electronic device 301 according to an embodiment may comprise, when it is identified, within a specified time from a time of outputting the ambient sound through the output device 360, that the wearable electronic device 301 is rotated back into a specified area corresponding to the first direction, stopping outputting the ambient sound.

The method for operating the wearable electronic device 301 according to an embodiment may comprise, when it is identified that the wearable electronic device 301 faces the second direction for a specified time from a time when the rotation angle is identified to be larger than the first specified value, outputting the ambient sound through the output device 360.

The method for operating the wearable electronic device 301 according to an embodiment may comprise, when it is identified that the wearable electronic device 301 faces the second direction more than a specified number of times, outputting the ambient sound through the output device 360.

The method for operating the wearable electronic device 301 according to an embodiment may comprise, when the wearable electronic device 301 faces the first direction, controlling the output device 360 so that a sound image of the sound is positioned in the first direction.

The method for operating the wearable electronic device 301 according to an embodiment may comprise, based on, identifying that the wearable electronic device 301 is rotated to the second direction and that the rotation angle is not larger than the first specified value, controlling the output device 360 so that the sound image of the sound is positioned in the second direction.

The method for operating the wearable electronic device 301 according to an embodiment may comprise , based on identifying that the wearable electronic device 301 is rotated to the second direction and that the rotation angle is larger than the first specified value, controlling the output device 360 so that the sound image of the sound is positioned in the first direction.

The method for operating the wearable electronic device 301 according to an embodiment may comprise, when it is identified that the rotation angle indicated by the first sensing value is larger than a second specified value, stopping outputting the sound.

The method for operating the wearable electronic device 301 according to an embodiment may comprise, based on identifying that the rotation angle indicated by the sensing value is larger than the first specified value while outputting the sound at a first intensity, outputting the ambient sound through the output device while outputting the sound at a second intensity smaller than the first intensity.

A non-transitory recording medium according to an embodiment may store at least one instruction capable of executing outputting sound through an output device 360 included in a wearable electronic device 301 based on a signal obtained from an electronic device 201 through a communication module 390 included in the wearable electronic device 301.

The non-transitory recording medium according to an embodiment may store at least one instruction capable of executing identifying a first direction of the wearable electronic device 301 worn by a user through a sensor 376 included in the wearable electronic device 301 while outputting the sound.

The non-transitory recording medium according to an embodiment may store at least one instruction capable of executing identifying whether the wearable electronic device 301 rotates from the first direction through the sensor 376.

The non-transitory recording medium according to an embodiment may store at least one instruction capable of executing, when the wearable electronic device 301 is rotated to the second direction, obtaining a first sensing value corresponding to a rotation angle between the first direction and the second direction.

The non-transitory recording medium according to an embodiment may store at least one instruction capable of executing, based on identifying that the rotation angle indicated by the first sensing value is larger than a first specified value, outputting ambient sound of the wearable electronic device 301 obtained through a microphone 350 included in the wearable electronic device 301 through the output device 360.

The non-transitory recording medium according to an embodiment may store at least one instruction capable of executing, when it is identified, within a specified time after outputting the ambient sound through the output device 360, that the wearable electronic device 301 is rotated back into a specified area corresponding to the first direction, stopping outputting the ambient sound.

The non-transitory recording medium according to an embodiment may store at least one instruction capable of executing, when it is identified that the wearable electronic device 301 faces the second direction during a specified time, outputting the ambient sound through the output device 360.

The non-transitory recording medium according to an embodiment may store at least one instruction capable of executing, when it is identified that the wearable electronic device 301 faces the second direction more than a specified number of times, outputting the ambient sound through the output device 360.

The non-transitory recording medium according to an embodiment may store at least one instruction capable of executing, when the wearable electronic device 301 faces the first direction, controlling the output device 360 so that a sound image of the sound is positioned in the first direction.

The non-transitory recording medium according to an embodiment may store at least one instruction capable of executing, based on identifying that the wearable electronic device 301 is rotated to the second direction and that the rotation angle is not larger than the first specified value, controlling the output device 360 so that the sound image of the sound is positioned in the second direction.

The non-transitory recording medium according to an embodiment may store at least one instruction capable of executing, based on identifying that the wearable electronic device 301 is rotated to the second direction and that the rotation angle is larger than the first specified value, controlling the output device 360 so that the sound image of the sound is positioned in the first direction.

The non-transitory recording medium according to an embodiment may store at least one instruction capable of executing, when it is identified that the rotation angle indicated by the first sensing value is larger than a second specified value, stopping outputting the sound.

The non-transitory recording medium according to an embodiment may store at least one instruction capable of executing, based on identifying that the rotation angle indicated by the sensing value is larger than the first specified value while outputting the sound at a first intensity, outputting the ambient sound through the output device 360 while outputting the sound at a second intensity smaller than the first intensity.

An electronic device 201 according to an embodiment may comprise memory 130 storing instructions, a communication module 290, and a processor 220.

According to an embodiment, the processor 220 may be operatively connected to the memory 130 and the communication module 290.

In the electronic device 201 according to an embodiment, the instructions may, when executed by the processor 220, cause the electronic device 201 to transmit, through the communication module 290, a signal related to sound to a wearable electronic device 301 so that the wearable electronic device 301 outputs the sound.

In the electronic device 201 according to an embodiment, the instructions may, when executed by the processor 220, cause the electronic device 201 to, based on the wearable electronic device 301 rotating from a first direction to a second direction while the wearable electronic device 301 outputs the sound, obtain first information about a rotation angle between the first direction and the second direction from the wearable electronic device 301 through the communication module 290.

In the electronic device 201 according to an embodiment, the instructions may, when executed by the processor 220, cause the electronic device 201 to, based on identifying that the rotation angle indicated by the first information is larger than a first specified value, transmit a first control signal to the wearable electronic device 301 through the communication module 290 so that the wearable electronic device 301 outputs ambient sound of the wearable electronic device 301.

In the electronic device 201 according to an embodiment, the instructions may, when executed by the processor 220, cause the electronic device 201 to, when it is identified, within a specified time after outputting the ambient sound through the output device 360, that the wearable electronic device 301 is rotated back into a specified area corresponding to the first direction, transmit a second control signal to the wearable electronic device 301 through the communication module 290 to stop outputting the ambient sound.

In the electronic device 201 according to an embodiment, the instructions may, when executed by the processor 220, cause the electronic device 301 to, when it is identified that the wearable electronic device 301 faces the second direction more than a specified number of times, transmit a second control signal to the wearable electronic device 301 through the communication module 290 to output the ambient sound through the output device 360.

In the electronic device 201 according to an embodiment, the instructions may, when executed by the processor 220, cause the electronic device 201 to, when it is identified that the rotation angle indicated by the first sensing value is larger than a second specified value, transmit a second control signal to the wearable electronic device 301 through the communication module 290 to stop outputting the sound.

A method for operating an electronic device 201 according to an embodiment may comprise transmitting, through a communication module 290 included in the electronic device 201, a signal related to sound to a wearable electronic device 301 so that the wearable electronic device 301 outputs the sound.

The method for operating the electronic device 201 according to an embodiment may comprise, based on the wearable electronic device 301 rotating from a first direction to a second direction while the wearable electronic device 301 outputs the sound, obtaining first information about a rotation angle between the first direction and the second direction from the wearable electronic device 301 through the communication module 290.

The method for operating the electronic device 201 according to an embodiment may comprise, based on identifying that the rotation angle indicated by the first information is larger than a first specified value, transmitting a first control signal to the wearable electronic device 301 through the communication module 290 so that the wearable electronic device 301 outputs ambient sound of the wearable electronic device 301 while outputting the sound.

The method for operating the electronic device 201 according to an embodiment may comprise, when it is identified, within a specified time from a time of outputting the ambient sound through the output device 360, that the wearable electronic device 301 is rotated back into a specified area corresponding to the first direction, transmitting a second control signal to the wearable electronic device 301 through the communication module 290 to stop outputting the ambient sound.

The method for operating the electronic device 201 according to an embodiment may comprise, when it is identified that the wearable electronic device 301 faces the second direction more than a specified number of times, transmitting a second control signal to the wearable electronic device 301 through the communication module 290 to output the ambient sound through the output device.

The method for operating the electronic device 201 according to an embodiment may comprise, when it is identified that the rotation angle indicated by the first sensing value is larger than a second specified value, transmitting a second control signal to the wearable electronic device 301 through the communication module 290 to stop outputting the sound.

A non-transitory recording medium according to an embodiment may store at least one instruction capable of executing transmitting, through a communication module 290 included in the electronic device 201, a signal related to sound to a wearable electronic device 301 so that the wearable electronic device 301 outputs the sound.

The non-transitory recording medium according to an embodiment may store at least one instruction capable of executing, based on the wearable electronic device 301 rotating from a first direction to a second direction while the wearable electronic device 301 outputs the sound, obtaining first information about a rotation angle between the first direction and the second direction from the wearable electronic device 301 through the communication module 290.

The non-transitory recording medium according to an embodiment may store at least one instruction capable of executing, based on identifying that the rotation angle indicated by the first information is larger than a first specified value, transmitting a first control signal to the wearable electronic device 301 through the communication module 290 so that the wearable electronic device 301 outputs ambient sound of the wearable electronic device 301.

The non-transitory recording medium according to an embodiment may store at least one instruction capable of executing, when it is identified, within a specified time from a time of outputting the ambient sound through the output device 360, that the wearable electronic device 301 is rotated back into a specified area corresponding to the first direction, transmitting a second control signal to the wearable electronic device 301 through the communication module 290 to stop outputting the ambient sound.

The non-transitory recording medium according to an embodiment may store at least one instruction capable of executing, when it is identified that the wearable electronic device 301 faces the second direction more than a specified number of times, transmitting a second control signal to the wearable electronic device 301 through the communication module 290 to output the ambient sound through the output device 360.

The non-transitory recording medium according to an embodiment may store at least one instruction capable of executing, when it is identified that the rotation angle indicated by the first sensing value is larger than a second specified value, transmitting a second control signal to the wearable electronic device 301 through the communication module 290 to stop outputting the sound.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that when an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101, the electronic device 201, or the wearable electronic device 301). For example, a processor (e.g., the processor 120, the processor 220, or the processor 320) of the machine (e.g., the electronic device 101, the electronic device 201, or the wearable electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. When distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101, 102, 104 of FIG. 1; 301 of FIG. 3), comprising:
a communication module (190 of FIG. 1; 390 of FIG. 3);
a sensor (176 of FIG. 1; 376 of FIG. 3);
a microphone (150 of FIG. 1; 350 of FIG. 3);
an output device (160 of FIG. 1; 360 of FIG. 3);
memory (130 of FIG. 1) storing instructions; and
a processor (120 of FIG. 1; 320 of FIG. 3) operatively connected to the communication module, the sensor, the microphone, the output device, and the memory,
wherein the instructions, when executed by the processor, cause the wearable electronic device to:
based on a signal obtained from an electronic device (101, 102, 104 of FIG. 1; 201 of FIG. 3) through the communication module, output sound through the output device;
while outputting the sound, identify, through the sensor, a first direction of the wearable electronic device worn by a user;
when identifying, through the sensor, that the wearable electronic device is rotated from the first direction to a second direction, identify a first sensing value corresponding to a rotation angle between the first direction and the second direction; and
based on identifying that the rotation angle indicated by the first sensing value is larger than a first specified value, output, through the output device, ambient sound of the wearable electronic device obtained through the microphone.

2. The wearable electronic device of claim 1,
wherein the instructions, when executed by the processor, cause the wearable electronic device to, when it is identified, within a specified time from a time of outputting the ambient sound through the output device, that the wearable electronic device is rotated back into a specified area corresponding to the first direction, stop outputting the ambient sound.

3. The wearable electronic device of claim 1 or 2,
wherein the instructions, when executed by the processor, cause the wearable electronic device to, when it is identified that the wearable electronic device faces the second direction for a specified time from a time when the rotation angle is identified to be larger than the first specified value, output, through the output device, the ambient sound.

4. The wearable electronic device of any one of claims 1 to 3,
wherein the instructions, when executed by the processor, cause the wearable electronic device to, when it is identified that the wearable electronic device faces the second direction more than a specified number of times, output, through the output device, the ambient sound.

5. The wearable electronic device of any one of claims 1 to 4,
wherein the instructions, when executed by the processor, cause the wearable electronic device to, when the wearable electronic device faces the first direction, control the output device so that a sound image of the sound is positioned in the first direction.

6. The wearable electronic device of any one of claims 1 to 5,
wherein the instructions, when executed by the processor, cause the wearable electronic device to:
based on identifying that the wearable electronic device is rotated to the second direction and that the rotation angle is not larger than the first specified value, control the output device so that the sound image of the sound is positioned in the second direction; and
based on identifying that the wearable electronic device is rotated to the second direction and that the rotation angle is larger than the first specified value, control the output device so that the sound image of the sound is positioned in the first direction.

7. The wearable electronic device of any one of claims 1 to 6,
wherein the instructions, when executed by the processor, cause the wearable electronic device to, when it is identified that the rotation angle indicated by the first sensing value is larger than a second specified value, stop outputting the sound.

8. The wearable electronic device of any one of claims 1 to 7,
wherein the instructions, when executed by the processor, cause the wearable electronic device to, based on identifying that the rotation angle indicated by the sensing value is larger than the first specified value while outputting the sound at a first intensity, output, through the output device, the ambient sound while outputting the sound at a second intensity smaller than the first intensity.

9. The wearable electronic device of any one of claims 1 to 8,
wherein the instructions, when executed by the processor, cause the wearable electronic device to, when it is identified that a rotation speed from the first direction to a third direction is larger than a third specified value, output the ambient sound of the wearable electronic device.

10. A method for operating a wearable electronic device (101 of FIG. 1; 301 of FIG. 3), the method comprising:
based on a signal obtained from an electronic device (102, 104 of FIG. 1; 201 of FIG. 3) through a communication module (190 of FIG. 1; 390 of FIG. 3) included in the wearable electronic device, outputting sound through an output device (160 of FIG. 1; 360 of FIG. 3) included in the wearable electronic device;
identifying, through a sensor (176 of FIG. 1; 376 of FIG. 3) included in the wearable electronic device, a first direction of the wearable electronic device worn by a user while outputting the sound;
when identifying, through the sensor, that the wearable electronic device is rotated from the first direction to a second direction, obtaining a first sensing value corresponding to a rotation angle between the first direction and the second direction; and
based on identifying that the rotation angle indicated by the first sensing value is larger than a first specified value, outputting, through the output device, ambient sound of the wearable electronic device obtained through a microphone (150 of FIG. 1; 350 of FIG. 3) included in the wearable electronic device.

11. The method of claim 10, further comprising, when it is identified, within a specified time from a time of outputting the ambient sound through the output device, that the wearable electronic device is rotated back into a specified area corresponding to the first direction, stopping outputting the ambient sound.

12. The method of claim 10 or 11, further comprising, when it is identified that the wearable electronic device faces the second direction for a specified time from a time when the rotation angle is identified to be larger than the first specified value, outputting the ambient sound through the output device.

13. The method of any one of claims 10 to 12, further comprising, when it is identified that the wearable electronic device faces the second direction more than a specified number of times, outputting, through the output device, the ambient sound.

14. The method of any one of claims 10 to 13, further comprising, when the wearable electronic device faces the first direction, controlling the output device so that a sound image of the sound is positioned in the first direction.

15. A non-transitory recording medium storing instructions capable of executing:
based on a signal obtained from an electronic device (102, 104 of FIG. 1; 201 of FIG. 3) through a communication module (190 of FIG. 1; 390 of FIG. 3) included in a wearable electronic device, outputting sound through an output device (160 of FIG. 1; 360 of FIG. 3) included in the wearable electronic device;
identifying, through a sensor (176 of FIG. 1; 376 of FIG. 3) included in the wearable electronic device, a first direction of the wearable electronic device worn by a user while outputting the sound;
when identifying, through the sensor, that the wearable electronic device is rotated from the first direction to a second direction, obtaining a first sensing value corresponding to a rotation angle between the first direction and the second direction; and
based on identifying that the rotation angle indicated by the first sensing value is larger than a first specified value, outputting, through the output device, ambient sound of the wearable electronic device obtained through a microphone (150 of FIG. 1; 350 of FIG. 3) included in the wearable electronic device.
